# EUROPEAN PATENT SPECIFICATION

(11) **EP 4 098 474 B1**
(45) Date of publication and mention of the grant of the patent: **22.11.2023**
(21) Application number: 22176275.0
(22) Date of filing: 31.05.2022
(51) Int. Cl.: B60L 15/00, B60L 58/20, H02P 25/16

(54) **ENERGY CONVERSION SYSTEM, ENERGY CONVERSION METHOD, AND POWER SYSTEM**
ENERGIEUMWANDLUNGSSYSTEM, ENERGIEUMWANDLUNGSVERFAHREN UND LEISTUNGSSYSTEM
SYSTÈME DE CONVERSION D'ÉNERGIE, PROCÉDÉ DE CONVERSION D'ÉNERGIE ET SYSTÈME D'ALIMENTATION

(30) Priority: 31.05.2021 CN 202110602846; 26.09.2021 CN 202111129268
(43) Date of publication of application: 07.12.2022
(73) Proprietor: Huawei Digital Power Technologies Co., Ltd., Shenzhen, 518043 (CN)
(72) Inventor: ZHANG, Wei, Shenzhen, 518129 (CN); CUI, Zhaoxue, Shenzhen, 518129 (CN); FENG, Ningbo, Shenzhen, 518129 (CN)
(74) Representative: Thun, Clemens

(56) References cited:
- US-A1- 2007 278 987
- US-A1- 2011 187 184
- US-A1- 2014 097 792

## Description

### TECHNICAL FIELD

This application relates to the field of power electronics technologies, and in particular, to an energy conversion system, an energy conversion method, and a power system.

### BACKGROUND

With the rapid development of new energy vehicles, electric vehicles have become a development trend of new energy vehicles in the future due to their advantages such as high efficiency, energy saving, low noise, and zero emission. A battery charging circuit (that is, a circuit configured to charge a traction battery and an auxiliary battery) and a motor driving circuit (that is, a circuit configured to drive a motor) in the electric vehicle are independent of each other, resulting in a complex structural layout and low integration of the electric vehicle. Therefore, it is particularly important to integrate the battery charging circuit and the motor driving circuit. Currently, a winding of the motor and the motor driving circuit in the electric vehicle may be reused, and a plurality of contactors may be added to the electric vehicle. The motor driving circuit and the plurality of contactors are controlled to be turned on or off to drive the motor or charge the traction battery and the auxiliary battery. However, motor driving power is much greater than battery charging power. As a result, a plurality of large-current contactors are added to the electric vehicle, which leads to an excessive energy loss in a battery charging process. In addition, driving of the motor and charging of the traction battery and the auxiliary battery cannot be performed simultaneously, which leads to weak applicability.

An energy conversion system according to the preamble of claim 1 is disclosed in US 2014/097792 A1.

### SUMMARY

This application provides an energy conversion system, an energy conversion method, and a power system, to charge a traction battery and an auxiliary battery while driving a motor, thereby achieving higher energy conversion efficiency, low costs, and strong applicability. The invention is defined by the subject matter of independent claims 1 and 7 wherein preferred further developments of the invention are subject matter of the dependent claims.

According to a first aspect, this application provides an energy conversion system. The energy conversion system may include a bridge arm conversion module, a direct current (DC)/DC conversion module, a motor, a bus capacitor, and a control module. A first bridge arm midpoint of the bridge arm conversion module may be connected to an alternating current charging interface, other bridge arm midpoints of the bridge arm conversion module may be respectively connected to three phases of windings in the motor, an input/output end of the bridge arm conversion module may be connected in parallel to a first input/output end of the DC/DC conversion module through the bus capacitor, a second input/output end of the DC/DC conversion module may be connected to a traction battery, a third input/output end of the DC/DC conversion module may be connected to an auxiliary battery, a neutral wire of the motor may be connected to the alternating current charging interface, the neutral wire of the motor may be led out from a common connection end of the three phases of windings, and the alternating current charging interface may be connected to a power supply. The control module may be configured to control a bridge arm switch action in the bridge arm conversion module, to drive the motor based on an alternating current input voltage supplied by the power supply and form a bus voltage at two ends of the bus capacitor, and control the DC/DC conversion module to charge the traction battery and the auxiliary battery based on the bus voltage. In this case, the traction battery and the auxiliary battery can be charged while the motor is driven. In the energy conversion system provided in this application, the bridge arm conversion module and the DC/DC conversion module may be controlled to drive the motor and charge the traction battery and the auxiliary battery, thereby improving energy conversion efficiency. In addition, no large-current contactor needs to be added to a circuit, so that a circuit structure is simple, costs are low, and applicability is strong.

Optionally, in a process of separately charging the traction battery and the auxiliary battery, the input/output end of the bridge arm conversion module may be used as an output end of the bridge arm conversion module, the first input/output end of the DC/DC conversion module may be used as an input end of the DC/DC conversion module to connect in parallel to the bus capacitor, and the second input/output end of the DC/DC conversion module may be used as an output end of the DC/DC conversion module to connect to the traction battery. The control module may control the three phases of windings and the bridge arm conversion module to output a direct current voltage to the DC/DC conversion module based on the alternating current input voltage, and control the DC/DC conversion module to charge the traction battery and the auxiliary battery based on the direct current voltage. Herein, the three phases of windings and the bridge arm conversion module may constitute a power factor correction (PFC) circuit. Therefore, the three phases of windings may be understood as an inductor in the power factor correction circuit. In a process of separately driving the motor, the input/output end of the bridge arm conversion module may be used as an input end of the bridge arm conversion module, the first input/output end of the DC/DC conversion module may be used as an output end of the DC/DC conversion module to connect in parallel to the bus capacitor, and the second input/output end of the DC/DC conversion module may be used as an input end of the DC/DC conversion module to connect to the traction battery. The control module may control the DC/DC conversion module to output a direct current voltage to the bridge arm conversion module based on a direct current voltage supplied by the traction battery, and control the bridge arm conversion module to convert the direct current voltage into an alternating current voltage, to drive the motor. In the energy conversion system provided in this application, the bridge arm conversion module and the DC/DC conversion module may be controlled to drive the motor or charge the traction battery and the auxiliary battery, and no large-current contactor needs to be added to a circuit, so that a circuit structure is simple, costs are low, and applicability is stronger.

With reference to the first aspect, the bridge arm conversion module includes a first bridge arm switch and a plurality of second bridge arm switches connected in parallel. The first bridge arm switch is connected in parallel to the plurality of second bridge arm switches connected in parallel, and a parallel connection end between the first bridge arm switch and the plurality of second bridge arm switches connected in parallel may be used as the input/output end of the bridge arm conversion module. One bridge arm switch includes an upper bridge arm switch and a lower bridge arm switch connected in series, a series connection point between the upper bridge arm switch and the lower bridge arm switch may be used as a bridge arm midpoint of the bridge arm switch, a bridge arm midpoint of the first bridge arm switch may be used as the first bridge arm midpoint of the bridge arm conversion module, bridge arm midpoints of the plurality of second bridge arm switches may be used as the other bridge arm midpoints of the bridge arm conversion module, and a bridge arm midpoint of one of the plurality of second bridge arm switches may be connected to one of the three phases of windings of the motor.

With reference to the first aspect, in a second possible implementation, the control module may be configured to control upper bridge arm switches and lower bridge arm switches in the bridge arm switches to be turned on or off, to drive the motor based on the alternating current input voltage supplied by the power supply and form the bus voltage at the two ends of the bus capacitor. In the energy conversion system provided in this application, the upper bridge arm switches and the lower bridge arm switches in the bridge arm switches may be controlled to be turned on or off, to drive the motor and supply charging power to charge the traction battery and the auxiliary battery, thereby achieving higher energy conversion efficiency and stronger applicability.

With reference to the second possible implementation of the first aspect, in a third possible implementation, the control module may be configured to generate a control signal of the upper bridge arm switches and the lower bridge arm switches in the bridge arm switches, and control, based on the control signal, the upper bridge arm switches and the lower bridge arm switches in the bridge arm switches to be turned on or off. The control signal may be determined based on a charging voltage and a charging current that are required by the traction battery and the auxiliary battery, a bus voltage required by the bus capacitor, and three phases of currents of the three phases of windings. Herein, the three phases of currents may be determined based on a current required by the motor to reach a target rotational speed and a target torque and an alternating current input current supplied by the power supply. In the energy conversion system provided in this application, the upper bridge arm switches and the lower bridge arm switches in the bridge arm switches may be controlled based on the control signal to be turned on or off, to drive the motor and supply charging power to charge the traction battery and the auxiliary battery, thereby achieving higher energy conversion efficiency and stronger applicability.

With reference to the second possible implementation of the first aspect, in a fourth possible implementation, the control module may be configured to collect three phases of currents of the three phases of windings and a bus voltage of the bus capacitor. The control module may include one or more functional modules having a voltage/current detection function, for example, a voltage detection circuit or a current detection circuit. The voltage detection circuit may be configured to collect the bus voltage, and the current detection circuit may be configured to collect the three phases of currents. Further, the control module may generate a control signal of the upper bridge arm switches and the lower bridge arm switches in the bridge arm switches based on the three phases of currents, the bus voltage, and the alternating current input voltage supplied by the power supply, and control, based on the control signal, the upper bridge arm switches and the lower bridge arm switches in the bridge arm switches to be turned on or off. In the energy conversion system provided in this application, the upper bridge arm switches and the lower bridge arm switches in the bridge arm switches may be controlled based on the control signal to be turned on or off, to drive the motor and supply charging power to charge the traction battery and the auxiliary battery, thereby achieving higher energy conversion efficiency and stronger applicability.

With reference to any one of the first aspect to the fourth possible implementation of the first aspect, in a fifth possible implementation, the DC/DC conversion module may include a first DC/DC conversion unit and a second DC/DC conversion unit, a first input/output end of the first DC/DC conversion unit may be used as the first input/output end of the DC/DC conversion module, a second input/output end of the first DC/DC conversion unit may be used as the second input/output end of the DC/DC conversion module and connected in parallel to a first input/output end of the second DC/DC conversion unit through the traction battery, and a second input/output end of the second DC/DC conversion unit may be used as the third input/output end of the DC/DC conversion module to connect to the auxiliary battery. The first DC/DC conversion unit may be configured to convert the bus voltage into a first direct current voltage to charge the traction battery, and the second DC/DC conversion unit may be configured to perform voltage conversion on the first direct current voltage of the traction battery to charge the auxiliary battery, to charge the traction battery and the auxiliary battery. In the energy conversion system provided in this application, the first DC/DC conversion unit and the second DC/DC conversion unit may be controlled to charge the traction battery and the auxiliary battery, thereby achieving higher energy conversion efficiency and stronger applicability.

With reference to any one of the first aspect to the fifth possible implementation of the first aspect, in a sixth possible implementation, the energy conversion system further includes a first switch, and the first bridge arm midpoint of the bridge arm conversion module or the neutral wire of the motor may be connected to the alternating current charging interface through the first switch. The control module may be configured to: when the alternating current charging interface is connected to an external device, control the first switch to be turned on, control the DC/DC conversion module to output a second direct current voltage to the bridge arm conversion module based on the direct current voltage supplied by the traction battery, and control the bridge arm conversion module to convert the second direct current voltage into an alternating current voltage, to drive the motor and charge the external device. In the energy conversion system provided in this application, the DC/DC conversion module and the bridge arm conversion module may be controlled to drive the motor and charge the external device, thereby achieving higher energy conversion efficiency, a simple circuit structure, low costs, and stronger applicability.

According to a second aspect, this application provides an energy conversion method. The method is applicable to the control module in the energy conversion system provided in any one of the first aspect to the sixth possible implementation of the first aspect. In the method, the control module may control a bridge arm switch action in the bridge arm conversion module, to drive the motor based on an alternating current input voltage supplied by the power supply and form a bus voltage at the two ends of the bus capacitor. The control module may control the DC/DC conversion module to charge the traction battery and the auxiliary battery based on the bus voltage.

With reference to the second aspect, in a first possible implementation, the control module may control upper bridge arm switches and lower bridge arm switches in bridge arm switches to be turned on or off, to drive the motor based on the alternating current input voltage supplied by the power supply and form the bus voltage at the two ends of the bus capacitor.

With reference to the first possible implementation of the second aspect, in a second possible implementation, the control module may obtain a current required by the motor to reach a target rotational speed and a target torque and an alternating current input current supplied by the power supply, and determine three phases of currents of the three phases of windings based on the current required by the motor to reach the target rotational speed and the target torque and the alternating current input current. Further, the control module may obtain a charging voltage and a charging current that are required by the traction battery and the auxiliary battery and a bus voltage required by the bus capacitor, generate a control signal of the upper bridge arm switches and the lower bridge arm switches in the bridge arm switches based on the charging voltage and the charging current that are required by the traction battery and the auxiliary battery, the bus voltage required by the bus capacitor, and the three phases of currents, and control, based on the control signal, the upper bridge arm switches and the lower bridge arm switches in the bridge arm switches to be turned on or off.

With reference to the first possible implementation of the second aspect, in a third possible implementation, the control module may collect three phases of currents of the three phases of windings and a bus voltage of the bus capacitor. For example, the control module may collect the three phases of currents based on a current detection circuit, and collect the bus voltage based on a voltage detection circuit. Further, the control module may generate a control signal of the upper bridge arm switches and the lower bridge arm switches in the bridge arm switches based on the three phases of currents, the bus voltage, and the alternating current input voltage supplied by the power supply, and control, based on the control signal, the upper bridge arm switches and the lower bridge arm switches in the bridge arm switches to be turned on or off.

With reference to any one of the second aspect to the third possible implementation of the second aspect, in a fourth possible implementation, the control module may control the first DC/DC conversion unit to convert the bus voltage into a first direct current voltage to charge the traction battery. In this case, the control module may control the second DC/DC conversion unit to perform voltage conversion on the first direct current voltage of the traction battery to charge the auxiliary battery.

With reference to any one of the second aspect to the fourth possible implementation of the second aspect, in a fifth possible implementation, when the alternating current charging interface is connected to an external device, the control module may control the first switch to be turned on, control the DC/DC conversion module to output a second direct current voltage to the bridge arm conversion module based on the direct current voltage supplied by the traction battery, and control the bridge arm conversion module to convert the second direct current voltage into an alternating current voltage, to drive the motor and charge the external device.

According to a third aspect, this application provides a power system. The power system includes a traction battery, an auxiliary battery, and the energy conversion system provided in any one of the first aspect to the fifth possible implementation of the first aspect. In the power system provided in this application, energy conversion efficiency of the power system can be improved, and the power system has a simple structure, low costs, and high integration.

With reference to the third aspect, in a first possible implementation, the power system further includes a positive temperature coefficient heater and a second switch connected in series. The positive temperature coefficient heater and the second switch connected in series are connected in parallel to the traction battery. The control module may be configured to control the second switch to be turned on, control the three phases of windings and the bridge arm conversion module to convert an alternating current input voltage of the power supply into a third direct current voltage, and control the DC/DC conversion module to supply power to the positive temperature coefficient heater based on the third direct current voltage, so that the positive temperature coefficient heater works. In the power system provided in this application, integrated control may be performed on the traction battery, the auxiliary battery, and the positive temperature coefficient heater, so that a high-voltage link is simple, costs are lower, and applicability is stronger.

With reference to the third aspect, in a second possible implementation, the power system further includes a positive temperature coefficient (positive temperature coefficient, PTC) heater and a second switch connected in series. The positive temperature coefficient heater and the second switch connected in series are connected in parallel to the traction battery. The control module is further configured to control the second switch to be turned on, and supply power to the positive temperature coefficient heater based on a direct current voltage supplied by the traction battery, so that the positive temperature coefficient heater works. In the power system provided in this application, integrated control may be performed on the traction battery, the auxiliary battery, and the positive temperature coefficient heater, so that a high-voltage link is simple, costs are lower, and applicability is stronger.

In this application, the bridge arm conversion module and the DC/DC conversion module may be controlled to drive the motor and charge the traction battery and the auxiliary battery, thereby improving energy conversion efficiency. In addition, no large-current contactor needs to be added to a circuit, so that a circuit structure is simple, costs are low, and applicability is strong.

### BRIEF DESCRIPTION OF DRAWINGS

FIG. 1 is a schematic diagram of an application scenario of an energy conversion system according to this application;
FIG. 2 is a schematic diagram of a structure of an energy conversion system according to this application;
FIG. 3 is another schematic diagram of a structure of an energy conversion system according to this application;
FIG. 4A and FIG. 4B are another schematic diagram of a structure of an energy conversion system according to this application;
FIG. 5 is a schematic diagram of a switch modulation waveform of an energy conversion system according to this application;
FIG. 6 is another schematic diagram of a structure of an energy conversion system according to this application;
FIG. 7 is another schematic diagram of a structure of an energy conversion system according to this application;
FIG. 8 is still another schematic diagram of a structure of an energy conversion system according to this application;
FIG. 9 is a schematic diagram of a structure of a power system according to this application;
FIG. 10 is another schematic diagram of a structure of a power system according to this application;
FIG. 11 is a schematic diagram of a high-voltage power link of a power system according to this application; and
FIG. 12 is a schematic flowchart of an energy conversion method according to this application.

### DESCRIPTION OF EMBODIMENTS

An electric vehicle may refer to a vehicle that is powered by an on-board power supply, runs with a wheel driven by a motor, and meets requirements of road traffic and safety regulations. Generally, the on-board power supply may supply direct current energy for the motor of the electric vehicle, and the motor of the electric vehicle may convert the direct current energy supplied by the on-board power supply into mechanical energy, and drive the wheel and a working apparatus by using a transmission apparatus or directly, to drive the electric vehicle to run. Electric vehicles use a traction battery (such as a lead-acid storage battery or other storage batteries) as an on-board power supply, which has a limited capacity. Therefore, to maximize a driving range of the electric vehicles, an energy feedback technology is used for motors of most electric vehicles. That is, when the electric vehicle is braked, a motor controller feeds back kinetic energy lost by a wheel to a traction battery, and makes the motor in a power generation state to deliver generated electric energy to the traction battery, to complete energy feedback, thereby prolonging a driving range of the electric vehicle. An energy conversion system provided in this application is applicable to a traction battery and an auxiliary battery in an electric device, to charge the traction battery and the auxiliary battery and drive a motor to make the electric device work. The electric device herein may include, but is not limited to, an electric vehicle, an electric amusement device, an electric train, an electric bicycle, a golf cart, or other electric devices. This may be specifically determined based on an actual application scenario, and is not limited herein.

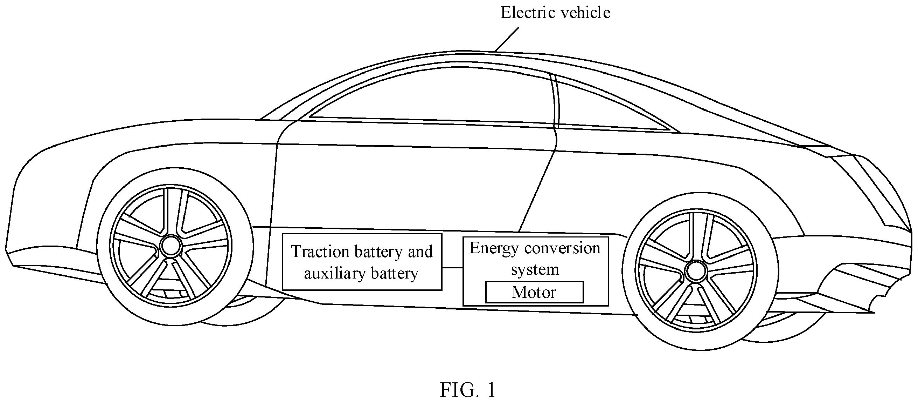

The energy conversion system provided in this application may be adapted to different application scenarios, for example, an electric vehicle application scenario and an electric amusement device application scenario. In this application, the electric vehicle application scenario is used as an example for description. FIG. 1 is a schematic diagram of an application scenario of an energy conversion system according to this application. In the electric vehicle application scenario, as shown in FIG. 1, the electric vehicle includes a traction battery, an auxiliary battery, and an energy conversion system. A motor in the energy conversion system may be understood as a motor (such as an air conditioner compressor motor) in the electric vehicle. When the traction battery and the auxiliary battery need to be charged, the energy conversion system may supply direct current energy to the traction battery and the auxiliary battery, to charge the traction battery and the auxiliary battery. After the traction battery is charged, the traction battery may supply direct current energy to a drive motor for vehicle driving in the electric vehicle, and the drive motor may convert the direct current energy supplied by the traction battery into mechanical energy, to drive the electric vehicle to run. When the motor needs to be driven, another functional module in the energy conversion system may supply alternating current energy to the motor to drive the motor to work. In this case, an air conditioning refrigeration system in the electric vehicle can work normally. Optionally, the energy conversion system may alternatively drive the motor and charge the traction battery and the auxiliary battery. In this way, the batteries are charged while the air conditioning refrigeration system works, which meets different requirements of the electric vehicle, and simplifies a structural layout of the electric vehicle, thereby achieving low costs, a small size, high integration, and stronger applicability.

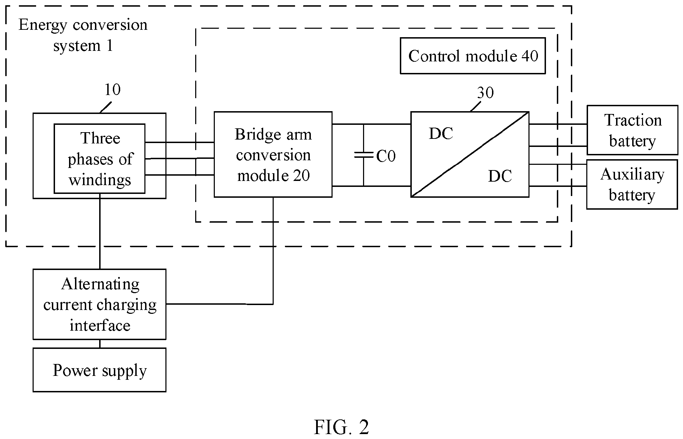

The following illustrates an energy conversion system and a power system that are provided in this application and their working principles with reference to FIG. 2 to FIG. 11.

FIG. 2 is a schematic diagram of a structure of an energy conversion system according to this application. As shown in FIG. 2, the energy conversion system 1 includes a motor 10, a bridge arm conversion module 20, a DC/DC conversion module 30, a control module 40, and a bus capacitor C0. A first bridge arm midpoint of the bridge arm conversion module 20 may be connected to an alternating current charging interface, and other bridge arm midpoints of the bridge arm conversion module 20 may be respectively connected to three phases of windings in the motor 10. An input/output end of the bridge arm conversion module 20 may be connected in parallel to a first input/output end of the DC/DC conversion module 30 through the bus capacitor C0. A second input/output end of the DC/DC conversion module 30 may be connected to a traction battery (which may also be referred to as a power battery). A third input/output end of the DC/DC conversion module 30 may be connected to an auxiliary battery (which may also be referred to as an auxiliary storage battery). A neutral wire of the motor 10 may be connected to the alternating current charging interface. The neutral wire of the motor 10 may be led out from a common connection end of the three phases of windings. The alternating current charging interface may be connected to a power supply (such as an alternating current power supply or an alternating current charging pile). Herein, the three phases of windings and the DC/DC conversion module 30 may constitute a power factor correction circuit, to implement a boost conversion function, a buck conversion function, and a power factor correction function. When the first bridge arm midpoint of the bridge arm conversion module 20 is connected to a neutral wire of the alternating current charging interface, the neutral wire of the motor 10 may be connected to a live wire of the alternating current charging interface. When the first bridge arm midpoint of the bridge arm conversion module 20 is connected to the live wire of the alternating current charging interface, the neutral wire of the motor 10 may be connected to the neutral wire of the alternating current charging interface. This may be specifically determined based on an actual application scenario, and is not limited herein.

In some feasible implementations, the control module 40, the bridge arm conversion module 20, and the DC/DC conversion module 30 may be integrated on a same control board or circuit board (PCB). The control module 40 (which may also be referred to as an integrated controller) may control the bridge arm conversion module 20 and the DC/DC conversion module 30 to be turned on or off. The circuit board herein may also be referred to as a PCB board or a printed circuit board. The circuit board is a support body for electronic components, and is also a carrier for electrically connecting the electronic components. The control module 40 may control a bridge arm switch action (that is, turn on or off a bridge arm switch) in the bridge arm conversion module 20, to drive the motor 10 based on an alternating current input voltage supplied by the power supply and form a bus voltage at two ends of the bus capacitor C0, and control the DC/DC conversion module 30 to charge the traction battery and the auxiliary battery based on the bus voltage. In this way, the motor can be driven and the traction battery and the auxiliary battery can be charged. The motor 10 herein may be a motor in an electric vehicle, for example, a drive motor for vehicle driving, an air conditioner compressor motor, or other motors. The air conditioner compressor motor is used as an example for description. The control module 40 may control a bridge arm switch action in the bridge arm conversion module 20, to drive the motor 10 based on the alternating current input voltage supplied by the power supply and form a bus voltage at the two ends of the bus capacitor C0. In this case, an air conditioning refrigeration system in the electric vehicle can work normally. Further, the control module 40 may further control the DC/DC conversion module 30 to charge the traction battery and the auxiliary battery based on the bus voltage of the bus capacitor C0. In this way, the traction battery and the auxiliary battery can be charged while the air conditioning refrigeration system works.

Optionally, in some feasible implementations, in a process of separately charging the traction battery and the auxiliary battery, the input/output end of the bridge arm conversion module 20 may be used as an output end of the bridge arm conversion module 20, the first input/output end of the DC/DC conversion module 30 may be used as an input end of the DC/DC conversion module 30 to connect in parallel to the bus capacitor C0, the second input/output end of the DC/DC conversion module 30 may be used as an output end of the DC/DC conversion module 30 to connect to the traction battery, and the third input/output end of the DC/DC conversion module 30 may be used as an output end of the DC/DC conversion module 30 to connect to the auxiliary battery. The control module 40 may control the three phases of windings in the motor 10 and the bridge arm conversion module 20 to perform boost conversion on the alternating current input voltage supplied by the power supply to output a direct current voltage to the DC/DC conversion module 30, and control the DC/DC conversion module 30 to charge the traction battery and the auxiliary battery based on the direct current voltage. In this case, the bus capacitor C0 may be used as a filter capacitor to filter a voltage signal passing through the bus capacitor C0, and output the voltage signal to the DC/DC conversion module 30. The voltage signal may be used to determine the direct current voltage input to the DC/DC conversion module 30.

Optionally, in some feasible implementations, in a process of separately driving the motor 10, the input/output end of the bridge arm conversion module 20 may be used as an input end of the bridge arm conversion module 20, the first input/output end of the DC/DC conversion module 30 may be used as an output end of the DC/DC conversion module 30 to connect in parallel to the bus capacitor C0, the second input/output end of the DC/DC conversion module 30 may be used as an input end of the DC/DC conversion module 30 to connect to the traction battery, and the alternating current charging interface is not connected to a power supply (for example, a switch may be disposed between the alternating current charging interface and the neutral wire of the three phases of windings, and the switch may be controlled to be open). The control module 40 may control the DC/DC conversion module 30 to output a direct current voltage to the bridge arm conversion module 20 based on a direct current voltage supplied by the traction battery, and control the bridge arm conversion module 20 to perform buck conversion on the direct current voltage to obtain an alternating current voltage, to drive the motor 10. In this case, the bus capacitor C0 may be used as a filter capacitor to filter a voltage signal passing through the bus capacitor C0, and output the voltage signal to the bridge arm conversion module 20. The voltage signal may be used to determine the direct current voltage input to the bridge arm conversion module 20. Optionally, the third input/output end of the DC/DC conversion module 30 may be used as an input end of the DC/DC conversion module 30 to connect to the auxiliary battery. The control module 40 may control the DC/DC conversion module 30 to output a direct current voltage to the bridge arm conversion module 20 based on a direct current voltage supplied by the auxiliary battery, and control the bridge arm conversion module 20 to perform buck conversion on the direct current voltage to obtain an alternating current voltage, to drive the motor 10. This may be specifically determined based on an actual application scenario, and is not limited herein.

The bridge arm conversion module 20 includes a first bridge arm switch and a plurality of second bridge arm switches connected in parallel. The first bridge arm switch is connected in parallel to the plurality of second bridge arm switches connected in parallel, and a parallel connection end between the first bridge arm switch and the plurality of second bridge arm switches connected in parallel may be used as the input/output end of the bridge arm conversion module 20. One bridge arm switch includes an upper bridge arm switch (which may also be referred to as an upper transistor switch) and a lower bridge arm switch (which may also be referred to as a lower transistor switch) connected in series. A series connection point between the upper bridge arm switch and the lower bridge arm switch may be used as a bridge arm midpoint of the bridge arm switch. A bridge arm midpoint of the first bridge arm switch may be used as the first bridge arm midpoint of the bridge arm conversion module 20, and bridge arm midpoints of the plurality of second bridge arm switches may be used as the other bridge arm midpoints of the bridge arm conversion module 20. Abridge arm midpoint of one of the plurality of second bridge arm switches may be connected to one of the three phases of windings of the motor 10. Herein, the first bridge arm switch and the plurality of second bridge arm switches may be metal-oxide-semiconductor field-effect transistors MOSFET) or insulated gate bipolar transistors (IGBT) made of a semiconductor material such as silicon (Si), a third-generation wide-band-gap semiconductor material such as silicon carbide (SiC), gallium nitride (GaN), diamond, or zinc oxide (ZnO), or other materials. This may be specifically determined based on an actual application scenario, and is not limited herein.

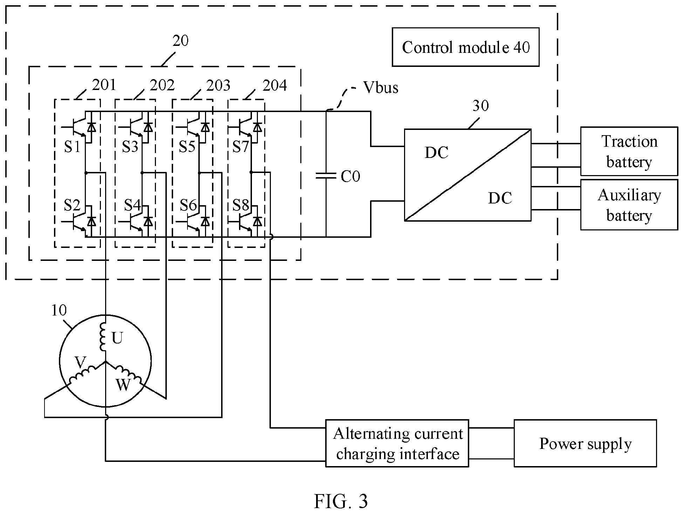

FIG. 3 is another schematic diagram of a structure of an energy conversion system according to this application. For ease of description, the following uses three second bridge arm switches as an example for description. As shown in FIG. 3, the bridge arm conversion module 20 shown in FIG. 2 includes a first bridge arm switch (for example, a bridge arm switch 204) and three second bridge arm switches (for example, a bridge arm switch 201 to a bridge arm switch 203) connected in parallel. The three phases of windings may include a winding V, a winding U, and a winding W. The winding V, the winding U, and the winding W are windings having a same frequency and amplitude. Herein, the bridge arm switch 201 to the bridge arm switch 204 are all IGBTs, the bridge arm switch 201 to the bridge arm switch 204 are connected in parallel, and a parallel connection end between the bridge arm switch 201 to the bridge arm switch 204 may be used as the input/output end of the bridge arm conversion module 20. The bridge arm switch 201 includes an upper bridge arm switch S1 and a lower bridge arm switch S2 connected in series, and a series connection point between the upper bridge arm switch S 1 and the lower bridge arm switch S2 may be used as a bridge arm midpoint of the bridge arm switch 201 to connect to the winding U. The bridge arm switch 202 includes an upper bridge arm switch S3 and a lower bridge arm switch S4 connected in series, and a series connection point between the upper bridge arm switch S3 and the lower bridge arm switch S4 may be used as a bridge arm midpoint of the bridge arm switch 202 to connect to the winding W. The bridge arm switch 203 includes an upper bridge arm switch S5 and a lower bridge arm switch S6 connected in series, and a series connection point between the upper bridge arm switch S5 and the lower bridge arm switch S6 may be used as a bridge arm midpoint of the bridge arm switch 203 to connect to the winding V Herein, the bridge arm midpoint of the bridge arm switch 201, the bridge arm midpoint of the bridge arm switch 202, and the bridge arm midpoint of the bridge arm switch 203 may be used as the other bridge arm midpoints of the bridge arm conversion module 20. The bridge arm switch 204 includes an upper bridge arm switch S7 and a lower bridge arm switch S8 connected in series, and a series connection point between the upper bridge arm switch S7 and the lower bridge arm switch S8 may be used as a bridge arm midpoint (that is, the first bridge arm midpoint of the bridge arm conversion module 20) of the bridge arm switch 204 to connect to the alternating current charging interface.

In some feasible implementations, the control module 40 may generate a control signal of the upper bridge arm switches and the lower bridge arm switches in the bridge arm switch 201 to the bridge arm switch 204. The control signal herein may be a pulse width modulation (pulse width modulation, PWM) signal, which may be referred to as a PWM signal for short. In the control signal, 1 indicates a switch to be turned on, and 0 indicates a switch to be turned off. The control signal may be determined based on a charging voltage and a charging current that are required by the traction battery and the auxiliary battery, a bus voltage required by the bus capacitor C0, and three phases of currents of the three phases of windings. The charging current required by the traction battery and the auxiliary battery may be understood as a current on the neutral wire of the motor 10 or an alternating current input current of the power supply, and the bus voltage required by the bus capacitor C0 may be a voltage value configured by the system or a voltage value configured by a user. Herein, the three phases of currents (that is, a current *Iᵥ* of the winding V, a current *Iᵤ* of the winding U, and a current *I_{w}* of the winding W) may be determined based on a current required by the motor 10 to reach a target rotational speed and a target torque and the alternating current input current supplied by the power supply. The target torque and the target rotational speed may be parameters configured by the energy conversion system or parameters configured by the user. The current required by the motor 10 to reach the target rotational speed and the target torque may include a current *I*_{*v*1} required by the winding V, a current *I*_{*u*1} required by the winding U, and a current I_{*w*1} required by the winding W, and the alternating current input current supplied by the power supply may be represented as *I* . Therefore, the current *Iᵥ* of the winding V is (*I*_{*v*1}+*I*/3), the current *Iᵤ* of the winding U is (*I*_{*u*1}+*I*/3), and the current *I*_{*w*1} of the winding W is (*I*_{*w*1}+*I*/3). Further, the control module 40 may control, based on the control signal, the upper bridge arm switches and the lower bridge arm switches in the bridge arm switch 201 to the bridge arm switch 204 to be turned on or off, to drive the motor 10 based on the alternating current input voltage supplied by the power supply and form a bus voltage (which may be represented as Vbus) at the two ends of the bus capacitor C0, and control the DC/DC conversion module 30 to convert the bus voltage into a target direct current voltage, to charge the traction battery and the auxiliary battery. In this way, the traction battery and the auxiliary battery can be charged while the motor is driven.

Optionally, in some feasible implementations, the control module 40 may collect three phases of currents of the three phases of windings (that is, a current *Iᵥ* of the winding V, a current *Iᵤ* of the winding U, and a current *I_{w}* of the winding W) and a bus voltage of the bus capacitor C0. It may be understood that the control module 40 may include one or more functional modules having a current detection function, for example, a current detection circuit, which may be configured to collect the three phases of currents of the three phases of windings. The control module 40 may further include one or more functional modules having a voltage detection function, for example, a voltage detection circuit, which may be configured to collect the bus voltage of the bus capacitor C0. Further, the control module 40 may generate a control signal of the upper bridge arm switches and the lower bridge arm switches in the bridge arm switch 201 to the bridge arm switch 204 based on the current *Iᵥ* of the winding V, the current *Iᵤ* of the winding U, the current *I_{w}* of the winding W, the bus voltage, and the alternating current input voltage supplied by the power supply, and control, based on the control signal, the upper bridge arm switches and the lower bridge arm switches in the bridge arm switches to be turned on or off. It may be understood that the control module 40 may control, based on the control signal, the upper bridge arm switches and the lower bridge arm switches in the bridge arm switches to be turned on or off, to drive the motor 10 and supply charging power to charge the traction battery and the auxiliary battery, thereby achieving higher energy conversion efficiency and stronger applicability.

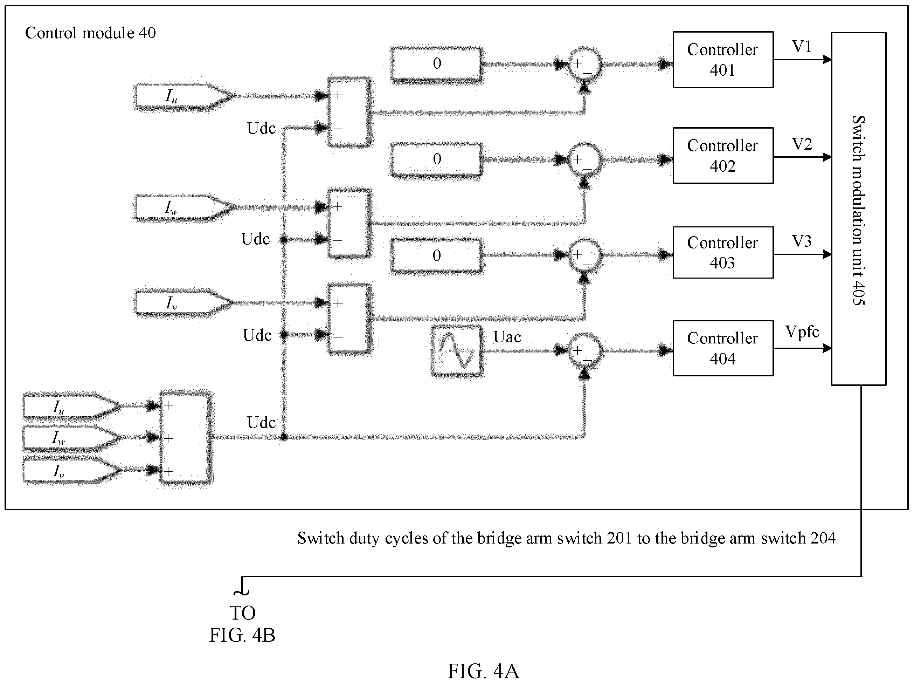

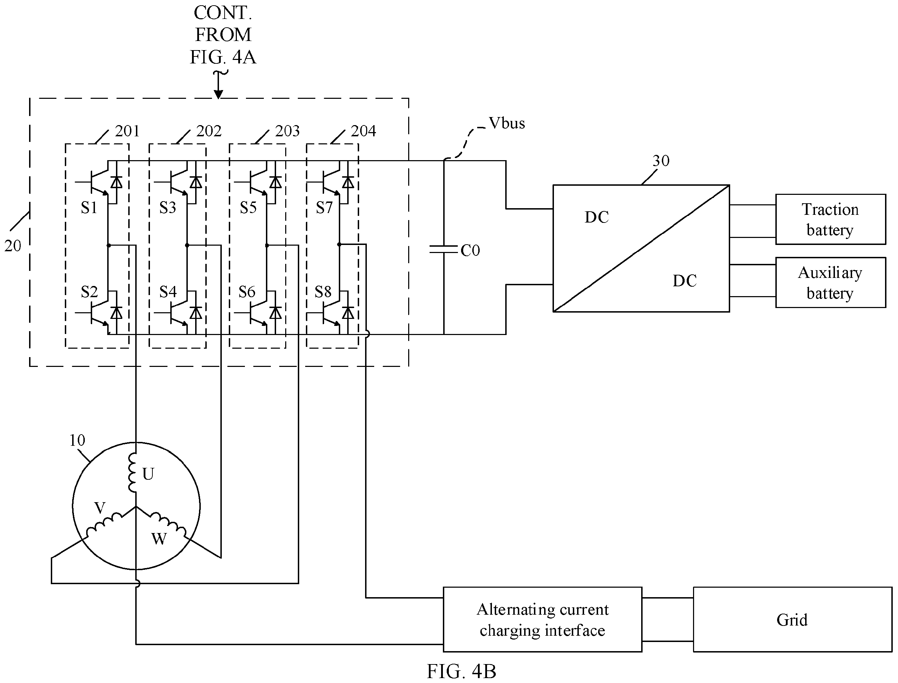

In some feasible implementations, for ease of description, the following provides a description by using an example in which the control signal is a switch duty cycle. Details are not described below again. FIG. 4A and FIG. 4B are another schematic diagram of a structure of an energy conversion system according to this application. As shown in FIG. 4A and FIG. 4B, the control module 40 shown in FIG. 3 includes a controller 401 to a controller 404 and a switch modulation unit 405. The controller 401 to the controller 404 may include but are not limited to a discrete PID controller (P represents proportion, I represents integral, and D represents differential). The controllers 401 to 403 may calculate, based on a motor control algorithm, difference components (that is, differential mode voltages) of three phases of voltages required by the motor 10. The controller 404 may calculate a voltage difference (that is, a common mode voltage) between the neutral wire of the motor 10 and the bridge arm midpoint of the bridge arm switch 204 (that is, a power frequency bridge arm) based on a PFC control algorithm. In this application, one or more functional units for switch modulation (for example, calculating a switch duty cycle) in the control module may be collectively referred to as a switch modulation unit. When switch modulation needs to be performed for the bridge arm switch 201 to the bridge arm switch 204 and the power supply is a grid, the controller 401 may perform calculation based on the current *Iᵤ* of the winding U and the bus voltage (which may be represented as Udc) of the bus capacitor C0 by using the motor control algorithm, to obtain a differential mode voltage V1 required by the winding U. The controller 402 may perform calculation based on the current *I_{w}* of the winding W and the bus voltage Udc by using the motor control algorithm, to obtain a differential mode voltage V2 required by the winding W. The controller 403 may perform calculation based on the current *Iᵥ* of the winding V and the bus voltage Udc by using the motor control algorithm, to obtain a differential mode voltage V3 required by the winding V The controller 404 may perform calculation based on the current *Iᵥ* of the winding V, the current *Iᵤ* of the winding U, the current *I_{w}* of the winding W, the bus voltage Udc, and the alternating current input voltage (which may be represented as Uac) of the grid by using the PFC control algorithm, to obtain a common mode voltage Vpfc.

In some feasible implementations, as shown in FIG. 4A and FIG. 4B, the switch modulation unit 405 may determine switch duty cycles of the upper bridge arm switches and the lower bridge arm switches in the bridge arm switch 201 to the bridge arm switch 204 based on the differential mode voltage V1, the differential mode voltage V2, the differential mode voltage V3, the common mode voltage Vpfc, and the bus voltage Udc. An upper bridge arm switch and a lower bridge arm switch in each bridge arm switch are complementarily turned on. In other words, the lower bridge arm switch is turned off when the upper bridge arm switch is turned on, or the lower bridge arm switch is turned on when the upper bridge arm switch is turned off. Specifically, the switch modulation unit 405 may determine an intermediate duty cycle (which may be represented as Dpfc) based on the common mode voltage Vpfc and the bus voltage Udc, for example, Dpfc=Vpfc/Udc. The intermediate duty cycle Dpfc may be used to calculate the switch duty cycles of the bridge arm switch 201 to the bridge arm switch 204. Further, the switch modulation unit 405 may determine a difference between 0.5 and the intermediate duty cycle Dpfc as a switch duty cycle (which may be represented as D0=0.5-Dpfc, where D0 is greater than or equal to 0 and is less than or equal to 1) of the bridge arm switch 204, and determine a switch duty cycle (which may be represented as D1) of the bridge arm switch 201 based on the switch duty cycle D0, the differential mode voltage V1, the intermediate duty cycle Dpfc, and the bus voltage Udc, for example, D 1=V 1/LTdc+Dpfc+D0. In this case, the switch modulation unit 405 may further determine a switch duty cycle (which may be represented as D2) of the bridge arm switch 202 based on the switch duty cycle D0, the differential mode voltage V2, the intermediate duty cycle Dpfc, and the bus voltage Udc, for example, D2=V2/LTdc+Dpfc+D0; and determine a switch duty cycle (which may be expressed as D3) of the bridge arm switch 203 based on the switch duty cycle D0, the differential mode voltage V3, the intermediate duty cycle Dpfc, and the bus voltage Udc, for example, D3=V3/Udc+Dpfc+D0. After obtaining the switch duty cycles of the bridge arm switches, the switch modulation unit 405 may control, based on the switch duty cycle D0, the switch duty cycle D1, the switch duty cycle D2, and the switch duty cycle D3, the upper bridge arm switches and the lower bridge arm switches in the bridge arm switches to be turned on or off, to implement a motor control function (that is, separately drive the motor 10), or implement closed-loop control over a grid-side current (that is, separately charge the traction battery and the auxiliary battery), or drive the motor 10 and supply charging power to charge the traction battery and the auxiliary battery, thereby achieving higher energy conversion efficiency, more flexible system operation, and stronger applicability.

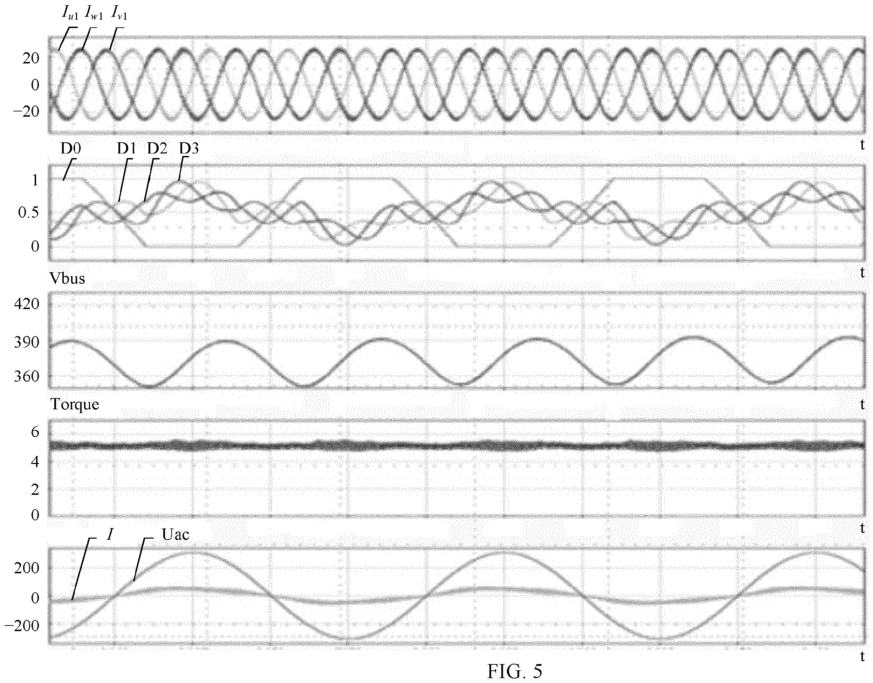

In some feasible implementations, when the traction battery and the auxiliary battery are charged while the motor 10 is driven, for waveforms corresponding to the switch duty cycles (that is, the switch duty cycle D0, the switch duty cycle D1, the switch duty cycle D2, and the switch duty cycle D3) of the bridge arm switches, refer to FIG. 5. FIG. 5 is a schematic diagram of a switch modulation waveform of an energy conversion system according to this application. As shown in FIG. 5, the control module 40 may control, based on the switch duty cycle D0, the switch duty cycle D1, the switch duty cycle D2, and the switch duty cycle D3 (duty cycles corresponding to duty cycle waveforms D0, D1, D2, and D3 shown in FIG. 5), the upper bridge arm switches and the lower bridge arm switches in the bridge arm switches to be turned on or off, to drive the motor 10 based on the alternating current input voltage Uac (voltage corresponding to a voltage waveform Uac shown in FIG. 5) of the grid and form the bus voltage Vbus (voltage corresponding to a voltage waveform Vbus shown in FIG. 5) at the two ends of the bus capacitor C0, and control the DC/DC conversion module 30 to charge the traction battery and the auxiliary battery based on the bus voltage Vbus. In this way, the motor 10 is driven, and charging power is supplied to charge the traction battery and the auxiliary battery. In this case, the motor 10 can reach a target torque (output torque corresponding to a torque waveform shown in FIG. 5), a differential mode current *I*_{*v*1} (current corresponding to a current waveform *I*_{*v*1} shown in FIG. 5) of the winding V is (*Iᵥ-I*/3) , a differential mode current *I*_{*u*1} (current corresponding to a current waveform *I*_{*u*1} shown in FIG. 5) of the winding U is (*Iᵤ-I*/3)*,* and a differential mode current *I*_{*w*1} (current corresponding to a current waveform *I*_{*w*1} shown in FIG. 5) of the winding W is (*I_{w}-I*/3)*. I* is the grid-side current (that is, the alternating current input current supplied by the power supply, which is a current corresponding to a current waveform *I* shown in FIG. 5), and *I* = *Iᵥ*+*Iᵤ*+*I_{w} .* It can be learned from above that, the control module 40 can control bridge arm switch actions based on the switch duty cycle D0 to the switch duty cycle D3, to drive the motor 10 and charge the traction battery and the auxiliary battery, thereby further achieving higher energy conversion efficiency, more flexible system operation, lower costs, and stronger applicability.

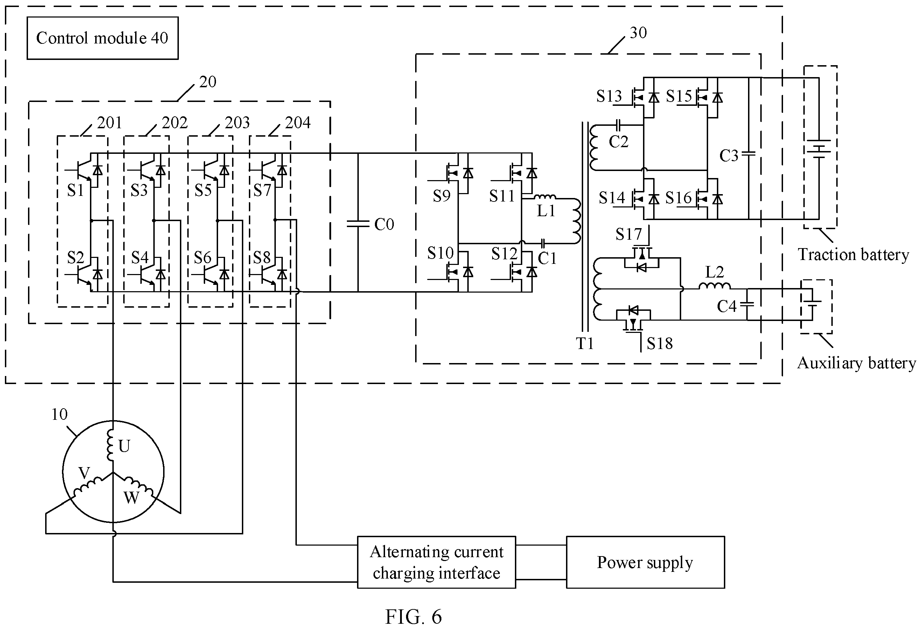

In some feasible implementations, a circuit topology of the DC/DC conversion module 30 may include a dual-active full-bridge circuit, a resonant circuit (such as an LLC resonant circuit or a CLLC resonant circuit), or a DC/DC conversion circuit of another type. FIG. 6 is another schematic diagram of a structure of an energy conversion system according to this application. As shown in FIG. 6, the DC/DC conversion module 30 shown in FIG. 3 includes a switch S9 to a switch S18, a filter capacitor C1 and a filter capacitor C2, an inductor L1 and an inductor L2, a transformer T1, and a capacitor C3 and a capacitor C4. The DC/DC conversion module 30 herein may include two first input/output ends, two second input/output ends, and two third input/output ends. A source of the switch S9 is connected to a drain of the switch S10, and the source of the switch S9 is connected to a primary side of the transformer T1 by using the filter capacitor C1. After connected, a drain of the switch S9 and a drain of the switch S 11 are used as one first input/output end of the DC/DC conversion module 30 to connect to one end of the bus capacitor C0. A source of the switch S11 is connected to a drain of the switch S12, and the source of the switch S11 is connected to the primary side of the transformer T1 by using the inductor L1. After connected, a source of the switch S10 and a source of the switch S12 are used as the other first input/output end of the DC/DC conversion module 30 to connect to the other end of the bus capacitor C0. A source of the switch S13 is connected to a drain of the switch S14, and the source of the switch S13 is connected to a secondary side of the transformer T1 by using the filter capacitor C2. After connected, a drain of the switch S13, a drain of the switch S15, and one end of the capacitor C3 are used as one second input/output end of the DC/DC conversion module 30 to connect to one end of the traction battery. A source of the switch S15 is connected to a drain of the switch S16 and the secondary side of the transformer T 1. After connected, a source of the switch S14, a source of the switch S16, and the other end of the capacitor C3 are used as the other second input/output end of the DC/DC conversion module 30 to connect to the other end of the traction battery. The secondary side of the transformer T1 is connected to a drain of the switch S17 and a drain of the switch S 18. After connected, a source of the switch S17, a source of the switch S18, and one end of the capacitor C4 are used as one third input/output end of the DC/DC conversion module 30 to connect to one end of the auxiliary battery. A midpoint of the secondary side of the transformer T1 is connected to one end of the inductor L2. After connected, the other end of the inductor L2 and the other end of the capacitor C4 are used as the other third input/output end of the DC/DC conversion module 30 to connect to the other end of the auxiliary battery. The DC/DC conversion module 30 may be an LLC resonant circuit, and the filter capacitor C1, the inductor L1, and the transformer T1 may form an LLC resonant network. In this way, zero-voltage switching of switches (such as the switches S9 to S12) on a primary side of a transformer (such as the transformer T1) can be implemented within a wide load range, thereby achieving higher energy conversion efficiency and stronger applicability. Herein, two channels of outputs of the DC/DC conversion module 30 may share the transformer T1, thereby saving a circuit component and reducing costs.

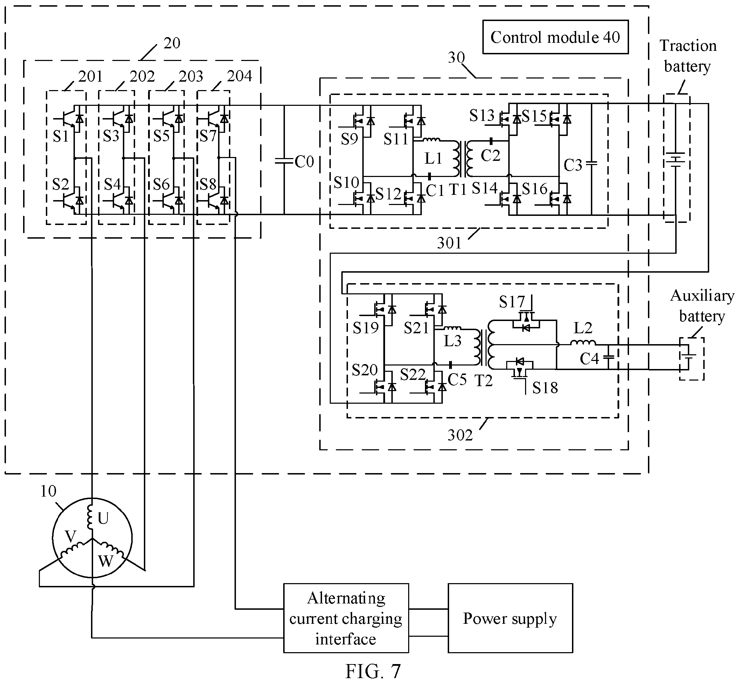

In some feasible implementations, FIG. 7 is another schematic diagram of a structure of an energy conversion system according to this application. As shown in FIG. 7, the DC/DC conversion module 30 shown in FIG. 3 includes a first DC/DC conversion unit 301 and a second DC/DC conversion unit 302. Herein, the first DC/DC conversion unit 301 is a high-voltage/high-voltage conversion unit, and the second DC/DC conversion unit 302 is a high-voltage/low-voltage conversion unit. A first input/output end of the first DC/DC conversion unit 301 may be used as the first input/output end of the DC/DC conversion module 30. A second input/output end of the first DC/DC conversion unit 301 may be used as the second input/output end of the DC/DC conversion module 30 and connected in parallel to a first input/output end of the second DC/DC conversion unit 302 through the traction battery. A second input/output end of the second DC/DC conversion unit 302 may be used as the third input/output end of the DC/DC conversion module 30 to connect to the auxiliary battery. The first DC/DC conversion unit 301 includes a switch S9 to a switch S16, a filter capacitor C1 and a filter capacitor C2, an inductor L1, a transformer T1, and a capacitor C3. The first DC/DC conversion unit 301 further includes two first input/output ends and two second input/output ends. In the first DC/DC conversion unit 301, a source of the switch S9 is connected to a drain of the switch S10, and the source of the switch S9 is connected to a primary side of the transformer T1 by using the filter capacitor C1. After connected, a drain of the switch S9 and a drain of the switch S11 are used as one first input/output end of the first DC/DC conversion unit 301 to connect to one end of the bus capacitor C0. A source of the switch S11 is connected to a drain of the switch S12, and the source of the switch S11 is connected to the primary side of the transformer T1 by using the inductor L1. After connected, a source of the switch S 10 and a source of the switch S 12 are used as the other first input/output end of the first DC/DC conversion unit 301 to connect to the other end of the bus capacitor C0. A source of the switch S13 is connected to a drain of the switch S14, and the source of the switch S13 is connected to a secondary side of the transformer T1 by using the filter capacitor C2. After connected, a drain of the switch S13, a drain of the switch S15, and one end of the capacitor C3 are used as one second input/output end of the first DC/DC conversion unit 301 to connect to one end of the traction battery. A source of the switch S 15 is connected to a drain of the switch S16 and the secondary side of the transformer T1. After connected, a source of the switch S14, a source of the switch S16, and the other end of the capacitor C3 are used as the other second input/output end of the first DC/DC conversion unit 301 to connect to the other end of the traction battery. The first DC/DC conversion unit 301 may be an LLC resonant circuit, and the filter capacitor C1, the inductor L1, and the transformer T1 may form an LLC resonant network. In this way, zero-voltage switching of switches (such as the switches S9 to S12) on a primary side of a transformer (such as the transformer T1) can be implemented within a wide load range, thereby achieving higher energy conversion efficiency and stronger applicability.

In some feasible implementations, as shown in FIG. 7, the second DC/DC conversion unit 302 includes a switch S17 to a switch S22, a filter capacitor C5, inductors L2 and L3, a transformer T2, and a capacitor C4. The second DC/DC conversion unit 301 further includes two first input/output ends and two second input/output ends. In the second DC/DC conversion unit 302, a source of the switch S19 is connected to a drain of the switch S20, and the source of the switch S19 is connected to a primary side of the transformer T2 by using the filter capacitor C5. After connected, a drain of the switch S19 and a drain of the switch S21 are used as one first input/output end of the second DC/DC conversion unit 302 to connect to one end of the traction battery. A source of the switch S21 is connected to a drain of the switch S22, and the source of the switch S21 is connected to the primary side of the transformer T2 by using the inductor L3. After connected, a source of the switch S20 and a source of the switch S22 are used as the other first input/output end of the second DC/DC conversion unit 302 to connect to the other end of the traction battery. A secondary side of the transformer T2 is connected to a drain of the switch S17 and a drain of the switch S 18. After connected, a source of the switch S17, a source of the switch S18, and one end of the capacitor C4 are used as one second input/output end of the second DC/DC conversion unit 302 to connect to one end of the auxiliary battery. A midpoint of the secondary side of the transformer T2 is connected to one end of the inductor L2. After connected, the other end of the inductor L2 and the other end of the capacitor C4 are used as the other second input/output end of the second DC/DC conversion unit 302 to connect to the other end of the auxiliary battery. The second DC/DC conversion unit 302 may be an LLC resonant circuit, and the filter capacitor C5, the inductor L3, and the transformer T2 may form an LLC resonant network. In this way, zero-voltage switching of switches (such as the switches S19 to S22) on a primary side of a transformer (such as the transformer T2) can be implemented within a wide load range, thereby achieving higher energy conversion efficiency and stronger applicability. Herein, two channels of outputs of the DC/DC conversion module 30 may use two transformers (such as the transformer T1 and the transformer T2) independent of each other, so that the two channels of outputs can be precisely controlled to charge the auxiliary battery and the traction battery, thereby achieving stronger applicability. After the motor 10 is driven and the bus voltage is formed at the two ends of the bus capacitor C0, the first DC/DC conversion unit 301 may convert the bus voltage into a first direct current voltage to charge the traction battery, and the second DC/DC conversion unit 302 may perform voltage conversion on the first direct current voltage of the traction battery to charge the auxiliary battery. In this way, the traction battery and the auxiliary battery are charged, and the motor is driven.

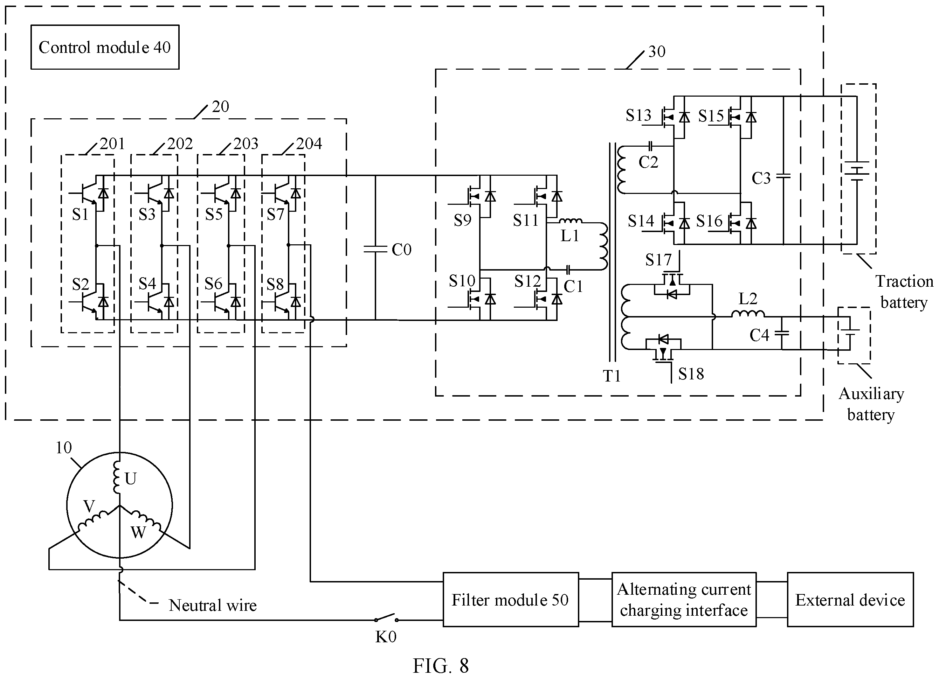

In some feasible implementations, FIG. 8 is still another schematic diagram of a structure of an energy conversion system according to this application. As shown in FIG. 8, the energy conversion system 1 shown in FIG. 6 further includes a first switch K0, and the neutral wire of the motor 10 may be connected to the alternating current charging interface through the first switch K0. Herein, the neutral wire of the motor 10 may be led out from a common connection end of the winding V, the winding U, and the winding W. Optionally, the bridge arm midpoint (that is, the first bridge arm midpoint) of the bridge arm switch 204 may also be connected to the alternating current charging interface through the first switch K0. This may be specifically determined based on an actual application scenario, and is not limited herein. When the alternating current charging interface is connected to an external device, the control module 40 controls the first switch K0 to be turned on, controls the DC/DC conversion module 30 to output a second direct current voltage to the bridge arm conversion module 20 based on the direct current voltage supplied by the traction battery, and controls the bridge arm conversion module 20 to convert the second direct current voltage into an alternating current voltage (for example, a 220 V alternating current), to drive the motor 10 and charge the external device, thereby effectively utilizing energy and further improving energy conversion efficiency.

Optionally, in some feasible implementations, as shown in FIG. 8, the energy conversion system 1 further includes a filter module 50, and the neutral wire of the motor 10 may be connected to the filter module 50 through the first switch K0. When the alternating current charging interface is connected to a power supply, the filter module 50 may filter a voltage signal supplied by the power supply, and output the voltage signal to the bridge arm conversion module 20. The voltage signal herein may be used to determine an alternating current input voltage supplied by the power supply. The winding V, the winding U, the winding W, and the bridge arm switch 201 to the bridge arm switch 203 may constitute a PFC circuit. Therefore, the winding V, the winding U, and the winding W may be understood as an inductor in the PFC circuit, and the bridge arm switch 201 to the bridge arm switch 203 may be used as three highfrequency bridge arms in the PFC circuit, to implement a voltage conversion function. In a process of separately charging the traction battery and the auxiliary battery, the control module 40 may control the first switch K0 to be closed, control the winding V, the winding U, the winding W, and the bridge arm switch 201 to the bridge arm switch 203 to perform boost conversion on the alternating current input voltage supplied by the power supply, to output a direct current voltage to the DC/DC conversion module 30, and control the DC/DC conversion module 30 to charge the traction battery and the auxiliary battery based on the direct current voltage. Optionally, the control module 40 may perform three-channel interleaved control on the bridge arm switch 201 to the bridge arm switch 203 to output the direct current voltage to the DC/DC conversion module 30 based on the alternating current input voltage, and a switch in each channel of the bridge arm switch 201 to the bridge arm switch 203 controls a phase angle difference to be 120°, to achieve a smaller ripple current of the alternating current charging interface and stronger applicability. In a process of separately driving the motor 10, the control module 40 may control the first switch K0 to be open, control the DC/DC conversion module 30 to output a second direct current voltage to the bridge arm conversion module 20 based on the direct current voltage supplied by the traction battery, and control the bridge arm conversion module 20 to convert the second direct current voltage into an alternating current voltage, to drive the motor 10.

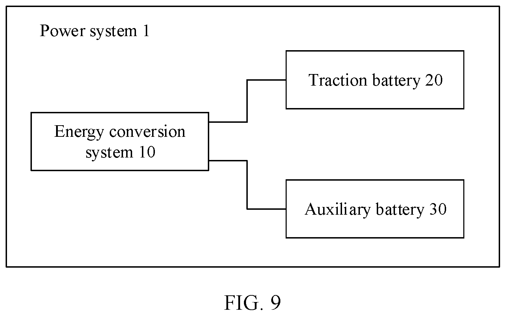

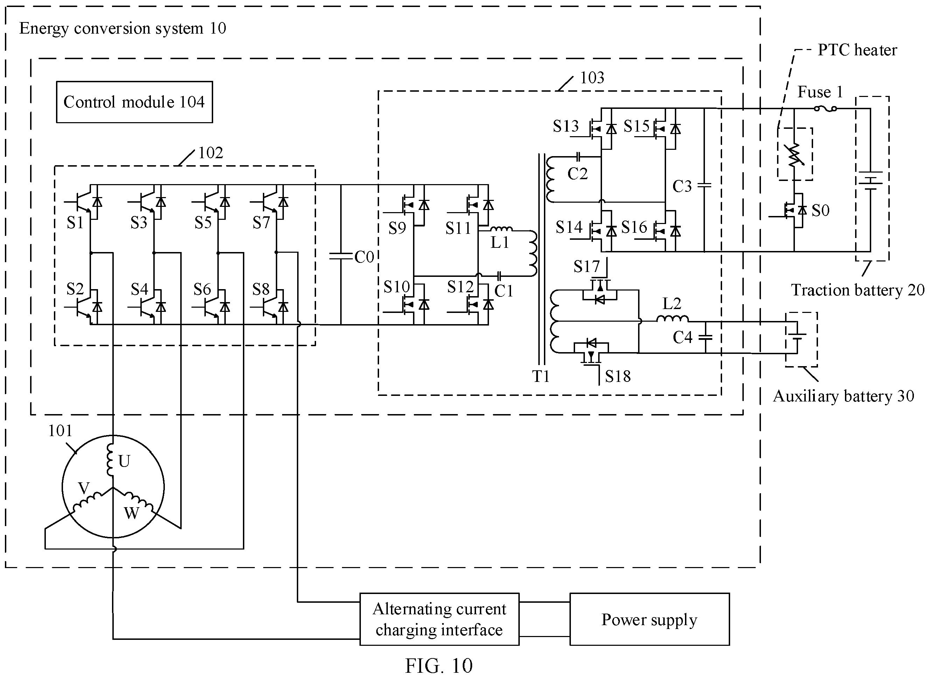

Further, FIG. 9 is a schematic diagram of a structure of a power system according to this application. As shown in FIG. 9, the power system 1 includes an energy conversion system 10 (such as the energy conversion system 1), a traction battery 20, and an auxiliary battery 30. The traction battery herein may refer to a power supply that supplies power for an electric vehicle, and the traction battery may include a ternary lithium battery, a lithium iron phosphate battery, and other traction batteries. The energy conversion system 10 may charge the traction battery 20 and the auxiliary battery 30. After the traction battery 20 is charged, the traction battery 20 may supply direct current energy to a drive motor for vehicle driving in the electric vehicle, and the drive motor may convert the direct current energy supplied by the traction battery 20 into mechanical energy, to drive the electric vehicle to run. FIG. 10 is another schematic diagram of a structure of a power system according to this application. As shown in FIG. 10, the power system 1 further includes a positive temperature coefficient heater (which may also be referred to as a PTC heater) and a second switch S0 connected in series. The PTC heater and the second switch S0 connected in series are connected in parallel to the traction battery 20. Optionally, the power system 1 further includes a fuse 1 (which may also be referred to as a cutout). The PTC heater and the second switch S0 connected in series may be connected in parallel to the traction battery 20 by using the fuse 1, and the fuse 1 may be configured for overcurrent protection of a circuit. The energy conversion system 10 shown in FIG. 9 includes a motor 101, a bridge arm conversion module 102, a DC/DC conversion module 103, and a control module 104. For circuit topologies of the bridge arm conversion module 102 and the DC/DC conversion module 103, refer to descriptions in FIG. 6. Details are not described herein again. When an alternating current charging interface is connected to a power supply, the control module 104 may control the second switch S0 to be turned on, control three phases of windings (that is, a winding V, a winding U, and a winding W) in the motor 101 and the bridge arm conversion module 102 to convert an alternating current input voltage of the power supply into a third direct current voltage, and control the DC/DC conversion module 103 to supply power to the PTC heater based on the third direct current voltage, so that the PTC heater works. Optionally, when the alternating current charging interface is not connected to a power supply, the control module 104 may control the second switch S0 to be turned on, and supply power to the PTC heater based on a direct current voltage supplied by the traction battery 20, so that the PTC heater works, to ensure that the power system 1 works normally in a low-temperature environment.

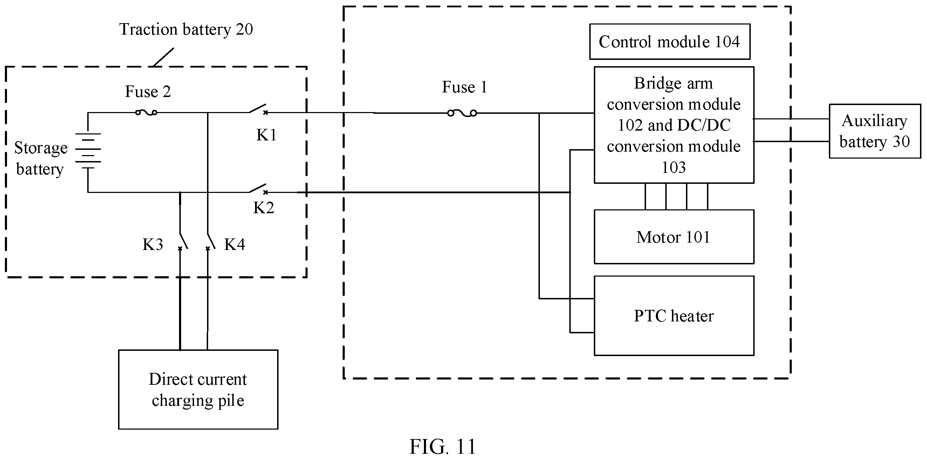

FIG. 11 is a schematic diagram of a high-voltage power link of a power system according to this application. As shown in FIG. 11, the traction battery 20 includes a main positive relay K1, a main negative relay K2, a direct current fast-charge relay K3, a direct current fast-charge relay K4, a storage battery, and a fuse 2 (fuse). A positive electrode of the storage battery may be connected to one end of the main positive relay K1 and one end of the direct current fast-charge relay K4 by using the fuse 2, and a negative electrode of the storage battery may be connected to one end of the main negative relay K2 and one end of the direct current fast-charge relay K3. The other end of the direct current fast-charge relay K3 and the other end of the direct current fast-charge relay K4 may be connected to a direct current charging pile. When the direct current charging pile performs direct current fast charge on the traction battery 20, both the direct current fast-charge relay K3 and the direct current fast-charge relay K4 are closed. When the direct current charging pile does not perform direct current fast charge on the traction battery 20, both the direct current fast-charge relay K3 and the direct current fast-charge relay K4 are open, and both the main positive relay K1 and the main negative relay K2 are closed. In this case, the control module 104 may control the three phases of windings in the motor 101 and the bridge arm conversion module 102 to convert the alternating current input voltage into the third direct current voltage, and control the DC/DC conversion module 103 to supply power to the traction battery 20, the auxiliary battery 30, and the PTC heater based on the third direct current voltage. The motor 101 may be an air conditioner compressor motor in an electric vehicle. Herein, the bridge arm conversion module 102 and the DC/DC conversion module 103 may constitute an on-board charger (OBC) in the electric vehicle. As shown in FIG. 11, the control module 104 may perform integrated control on charging management of the traction battery 20 and the auxiliary battery 30 and heating, ventilation and air conditioner management of the electric vehicle (such as the air conditioner compressor motor and the PTC heater), thereby avoiding use of a high-voltage power distribution unit (PDU) on the electric vehicle, and reducing costs. In addition, the motor 101, the bridge arm conversion module 102, the DC/DC conversion module 103, and the PTC heater share the fuse 1 (that is, a high-voltage fuse), which simplifies a high-voltage link, further reduces a size and costs of the electric vehicle, and achieves high integration. Optionally, the control module 104 may further integrate with a function of a vehicle control unit (VCU) to detect a working state of each functional module in the power system 1, which further simplifies the high-voltage link of the power system, and achieves stronger applicability.

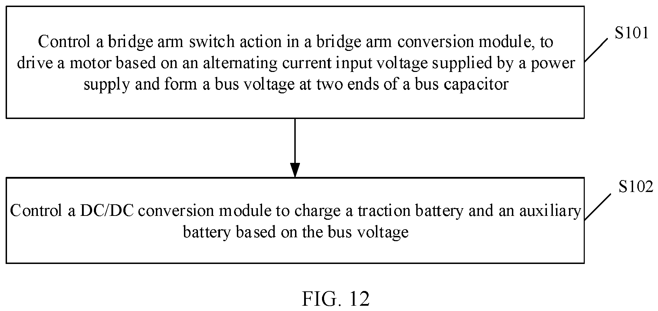

FIG. 12 is a schematic flowchart of an energy conversion method according to this application. The method is applicable to the control module in the energy conversion system (such as the energy conversion systems provided in FIG. 2 to FIG. 8). As shown in FIG. 12, the method includes the following steps S101 and S102.

Step S101: Control a bridge arm switch action in the bridge arm conversion module, to drive the motor based on an alternating current input voltage supplied by the power supply and form a bus voltage at the two ends of the bus capacitor.

In some feasible implementations, the control module may control upper bridge arm switches and lower bridge arm switches in bridge arm switches to be turned on or off, to drive the motor based on the alternating current input voltage supplied by the power supply and form the bus voltage at the two ends of the bus capacitor. Specifically, the control module may obtain a current required by the motor to reach a target rotational speed and a target torque and an alternating current input current supplied by the power supply, and determine three phases of currents of the three phases of windings based on the current required by the motor to reach the target rotational speed and the target torque and the alternating current input current. Herein, the target torque and the target rotational speed may be parameters configured by the energy conversion system or parameters configured by a user. Further, the control module may obtain a charging voltage and a charging current that are required by the traction battery and the auxiliary battery and a bus voltage required by the bus capacitor, generate a control signal of the upper bridge arm switches and the lower bridge arm switches in the bridge arm switches based on the charging voltage and the charging current that are required by the traction battery and the auxiliary battery, the bus voltage required by the bus capacitor, and the three phases of currents, and control, based on the control signal, the upper bridge arm switches and the lower bridge arm switches in the bridge arm switches to be turned on or off, to drive the motor based on the alternating current input voltage supplied by the power supply and form the bus voltage at the two ends of the bus capacitor. The control signal herein may be a pulse width modulation signal. In the control signal, 1 indicates a switch to be turned on, and 0 indicates a switch to be turned off.

Optionally, in some feasible implementations, the control module may collect three phases of currents of the three phases of windings and a bus voltage of the bus capacitor. For example, the control module may collect the three phases of currents of the three phases of windings based on a current detection circuit, and collect the bus voltage of the bus capacitor based on a voltage detection circuit. Further, the control module may generate a control signal of the upper bridge arm switches and the lower bridge arm switches in the bridge arm switches based on the three phases of currents, the bus voltage, and the alternating current input voltage supplied by the power supply, and control, based on the control signal, the upper bridge arm switches and the lower bridge arm switches in the bridge arm switches to be turned on or off, to drive the motor based on the alternating current input voltage supplied by the power supply and form the bus voltage at the two ends of the bus capacitor.

In some feasible implementations, for ease of description, the following provides a description by using an example in which the control signal is a switch duty cycle and the three phases of windings include the winding V, the winding U, and the winding W. Details are not described below again. The control module may perform calculation based on a current *Iᵤ* of the winding U and the bus voltage (which may be represented as Udc) of the bus capacitor by using a motor control algorithm, to obtain a differential mode voltage V1 required by the winding U; perform calculation based on a current *I_{w}* of the winding W and the bus voltage Udc by using the motor control algorithm to obtain a differential mode voltage V2 required by the winding W; and perform calculation based on a current *Iᵥ* of the winding V and the bus voltage Udc by using the motor control algorithm to obtain a differential mode voltage V3 required by the winding V Further, the control module may perform calculation based on the current *Iᵥ* of the winding V, the current *Iᵤ* of the winding U, the current *I_{w}* of the winding W, the bus voltage Udc, and the alternating current input voltage (which may be represented as Uac) of the power supply by using a PFC control algorithm, to obtain a common mode voltage Vpfc. In this case, the control module may determine switch duty cycles of the upper bridge arm switches and the lower bridge arm switches in the bridge arm switches based on the differential mode voltage V1, the differential mode voltage V2, the differential mode voltage V3, the common mode voltage Vpfc, and the bus voltage Udc. Specifically, the control module may determine an intermediate duty cycle (which may be represented as Dpfc) based on the common mode voltage Vpfc and the bus voltage Udc, for example, Dpfc=Vpfc/Udc. The intermediate duty cycle Dpfc may be used to calculate the switch duty cycles of the bridge arm switches. Further, the control module may determine a difference between 0.5 and the intermediate duty cycle Dpfc as a switch duty cycle (which may be represented as D0=0.5-Dpfc, where D0 is greater than or equal to 0 and is less than or equal to 1) of the first bridge arm switch, and determine switch duty cycles (as described above, D1=V1/LTdc+Dpfc+D0, D2=V2/Udc+Dpfc+D0, and D3=V3/Udc+Dpfc+D0) of the second bridge arm switches based on the switch duty cycle D0, the differential mode voltage V1 to the differential mode voltage V3, the intermediate duty cycle Dpfc, and the bus voltage Udc. After obtaining the switch duty cycles of the bridge arm switches, the control module may control, based on the switch duty cycles (for example, D0, D1, D2, and D3) of the bridge arm switches, the upper bridge arm switches and the lower bridge arm switches in the bridge arm switches to be turned on or off, to drive the motor based on the alternating current input voltage supplied by the power supply and form the bus voltage at the two ends of the bus capacitor. The bus voltage may be used to charge the traction battery and the auxiliary battery.

Step S 102: Control the DC/DC conversion module to charge the traction battery and the auxiliary battery based on the bus voltage.

In some feasible implementations, the control module may control the first DC/DC conversion unit to convert the bus voltage into a first direct current voltage to charge the traction battery. In this case, the control module may control the second DC/DC conversion unit to perform voltage conversion on the first direct current voltage of the traction battery to charge the auxiliary battery. In this way, the traction battery and the auxiliary battery are charged while the motor is driven. Optionally, when the alternating current charging interface is connected to an external device, the control module may control the first switch to be turned on, control the DC/DC conversion module to output a second direct current voltage to the bridge arm conversion module based on the direct current voltage supplied by the traction battery, and control the bridge arm conversion module to convert the second direct current voltage into an alternating current voltage, to drive the motor and charge the external device, thereby improving energy conversion efficiency.

During specific implementation, for more operations in the energy conversion method provided in this application, refer to the energy conversion systems shown in FIG. 2 to FIG. 8 and implementations performed by the control module in the working principles of the energy conversion systems. Details are not described herein again.

In this application, the bridge arm conversion module and the DC/DC conversion module may be controlled to drive the motor and charge the traction battery and the auxiliary battery, thereby improving energy conversion efficiency. In addition, no large-current contactor needs to be added to a circuit, so that a circuit structure is simple, costs are low, and applicability is strong.

## Claims

1. An energy conversion system (1), comprising a bridge arm conversion module (20), a direct current, DC/DC conversion module (30), a motor (10) comprising three phases of windings (U, V, W), a bus capacitor (C0), and a control module (40),
wherein the bridge arm conversion module (20) comprises a first bridge arm switch (204) and a plurality of second bridge arm switches (201, 202, 203) connected in parallel, the first bridge arm switch (204) is connected in parallel to the plurality of second bridge arm switches (201, 202, 203) connected in parallel, and a parallel connection end between the first bridge arm switch (204) and the plurality of second bridge arm switches (201, 202, 203) connected in parallel is used as an input/output end of the bridge arm conversion module (20), wherein each bridge arm switch (201, 202, 203, 204) comprises an upper bridge arm switch and a lower bridge arm switch connected in series, a series connection point between the upper bridge arm switch and the lower bridge arm switch is a bridge arm midpoint of the corresponding bridge arm switch (201, 202, 203, 204), a bridge arm midpoint of the first bridge arm switch (204) is the first bridge arm midpoint, bridge arm midpoints of the plurality of second bridge arm switches (201, 202, 203) are the other bridge arm midpoints;
wherein the first bridge arm midpoint of the bridge arm conversion module (20) is connected to an alternating current charging interface and each bridge arm midpoint of the plurality of second bridge arm switches (201, 202, 203) is connected to one of the three phases of windings (U, V, W) of the motor (10);
wherein the input/output end of the bridge arm conversion module (20) is connected in parallel to the bus capacitor (C0) and to
a first input/output end of the DC/DC conversion module (30), a second input/output end of the DC/DC conversion module (30) is connected to a traction battery, a third input/output end of the DC/DC conversion module (30) is connected to an auxiliary battery, a neutral wire of the motor (10) is connected to the alternating current charging interface, the neutral wire of the motor (10) is led out from a common connection end of the three phases of windings (U, V, W), and the alternating current charging interface is connected to a power supply;
**characterised in that**
the control module (40) is configured to control a bridge arm switch action in the bridge arm conversion module (20), to drive the motor (10) based on an alternating current input voltage supplied by the power supply and form a bus voltage (Vbus) at two ends of the bus capacitor (C0), and control the DC/DC conversion module (30) to charge the traction battery and the auxiliary battery based on the bus voltage.

2. The energy conversion system according to claim 1, wherein the control module (40) is configured to control upper bridge arm switches and lower bridge arm switches in the bridge arm switches (201, 202, 203, 204) to be turned on or off, to drive the motor (10) based on the alternating current input voltage supplied by the power supply and form the bus voltage (Vbus) at the two ends of the bus capacitor (C0).

3. The energy conversion system according to claim 2, wherein the control module (40) is configured to generate a control signal of the upper bridge arm switches and the lower bridge arm switches in the bridge arm switches (201, 202, 203, 204), and control, based on the control signal, the upper bridge arm switches and the lower bridge arm switches in the bridge arm switches (201, 202, 203, 204) to be turned on or off, wherein
the control signal is determined based on a charging voltage and a charging current that are required by the traction battery and the auxiliary battery, a bus voltage (Vbus) required by the bus capacitor (C0), and three phases of currents of the three phases of windings (U, V, W), and the three phases of currents are determined based on a current required by the motor (10) to reach a target rotational speed and a target torque and an alternating current input current supplied by the power supply.

4. The energy conversion system according to claim 2, wherein the control module (40) is configured to collect three phases of currents of the three phases of windings (U, V, W) and a bus voltage (Vbus) of the bus capacitor (C0), generate a control signal of the upper bridge arm switches and the lower bridge arm switches in the bridge arm switches (201, 202, 203, 204) based on the three phases of currents, the bus voltage (Vbus), and the alternating current input voltage supplied by the power supply, and control, based on the control signal, the upper bridge arm switches and the lower bridge arm switches in the bridge arm switches (201, 202, 203, 204) to be turned on or off.

5. The energy conversion system according to any one of claims 1 to 4, wherein the DC/DC conversion module (30) comprises a first DC/DC conversion unit (301) and a second DC/DC conversion unit (302), a first input/output end of the first DC/DC conversion unit (301) is used as the first input/output end of the DC/DC conversion module (30), a second input/output end of the first DC/DC conversion unit (301) is used as the second input/output end of the DC/DC conversion module (30) and connected in parallel to a first input/output end of the second DC/DC conversion unit (302) through the traction battery, and a second input/output end of the second DC/DC conversion unit (302) is used as the third input/output end of the DC/DC conversion module (30);
the first DC/DC conversion unit (301) is configured to convert the bus voltage (Vbus) into a first direct current voltage to charge the traction battery; and
the second DC/DC conversion unit (302) is configured to perform voltage conversion on the first direct current voltage of the traction battery to charge the auxiliary battery.

6. The energy conversion system according to any one of claims 1 to 5, wherein the energy conversion system further comprises a first switch (K0), and the first bridge arm midpoint of the bridge arm conversion module (20) or the neutral wire of the motor (10) is connected to the alternating current charging interface through the first switch (K0); and
the control module (40) is configured to: when the alternating current charging interface is connected to an external device, control the first switch (K0) to be turned on, control the DC/DC conversion module (30) to output a second direct current voltage to the bridge arm conversion module (20) based on the direct current voltage supplied by the traction battery, and control the bridge arm conversion module (20) to convert the second direct current voltage into an alternating current voltage, to drive the motor (10) and charge the external device.

7. A method for controlling the energy conversion system of claim 1, the method comprising:
controlling a bridge arm switch action in the bridge arm conversion module (20), to drive the motor (10) based on an alternating current input voltage supplied by the power supply and form a bus voltage (Vbus) at the two ends of the bus capacitor (C0); and
controlling the DC/DC conversion module (30) to charge the traction battery and the auxiliary battery based on the bus voltage (Vbus).

8. The method according to claim 7, wherein the controlling a bridge arm switch action in the bridge arm conversion module (20), to drive the motor (10) based on an alternating current input voltage supplied by the power supply and form a bus voltage (Vbus) at the two ends of the bus capacitor (C0) comprises:
controlling upper bridge arm switches and lower bridge arm switches in bridge arm switches (201, 202, 203, 204) to be turned on or off, to drive the motor (10) based on the alternating current input voltage supplied by the power supply and form the bus voltage (Vbus) at the two ends of the bus capacitor (C0).

9. The method according to claim 8, wherein the controlling upper bridge arm switches and lower bridge arm switches in bridge arm switches (201, 202, 203, 204) to be turned on or off comprises:
obtaining a current required by the motor (10) to reach a target rotational speed and a target torque and an alternating current input current supplied by the power supply, and determining three phases of currents of the three phases of windings (U, V, W) based on the current required by the motor (10) to reach the target rotational speed and the target torque and the alternating current input current; and
obtaining a charging voltage and a charging current that are required by the traction battery and the auxiliary battery and a bus voltage (Vbus) required by the bus capacitor (C0), generating a control signal of the upper bridge arm switches and the lower bridge arm switches in the bridge arm switches (201, 202, 203, 204) based on the charging voltage and the charging current that are required by the traction battery and the auxiliary battery, the bus voltage (Vbus) required by the bus capacitor (C0), and the three phases of currents, and controlling, based on the control signal, the upper bridge arm switches and the lower bridge arm switches in the bridge arm switches (201, 202, 203, 204) to be turned on or off.

10. The method according to claim 8, wherein the controlling upper bridge arm switches and lower bridge arm switches in bridge arm switches (201, 202, 203, 204) to be turned on or off comprises:
collecting three phases of currents of the three phases of windings (U, V, W) and a bus voltage (Vbus) of the bus capacitor (C0); and
generating a control signal of the upper bridge arm switches and the lower bridge arm switches in the bridge arm switches (201, 202, 203, 204) based on the three phases of currents, the bus voltage (Vbus), and the alternating current input voltage supplied by the power supply, and controlling, based on the control signal, the upper bridge arm switches and the lower bridge arm switches in the bridge arm switches (201, 202, 203, 204) to be turned on or off.

11. The method according to any one of claims 7 to 10, wherein the controlling the DC/DC conversion module (30) to charge the traction battery and the auxiliary battery based on the bus voltage (Vbus) comprises:
controlling the first DC/DC conversion unit (301) to convert the bus voltage (Vbus) into a first direct current voltage to charge the traction battery; and
controlling the second DC/DC conversion unit (302) to perform voltage conversion on the first direct current voltage of the traction battery to charge the auxiliary battery.

12. The method according to any one of claims 7 to 11, wherein the method further comprises:
when the alternating current charging interface is connected to an external device, controlling the first switch (K0) to be turned on, controlling the DC/DC conversion module (30) to output a second direct current voltage to the bridge arm conversion module (20) based on the direct current voltage supplied by the traction battery, and controlling the bridge arm conversion module (20) to convert the second direct current voltage into an alternating current voltage, to drive the motor (10) and charge the external device.

13. A power system, wherein the power system comprises a traction battery, an auxiliary battery, and the energy conversion system (1) according to any one of claims 1 to 6.

14. The power system according to claim 13, wherein the power system further comprises a positive temperature coefficient heater and a second switch connected in series, and the positive temperature coefficient heater and the second switch connected in series are connected in parallel to the traction battery; and
the control module (40) is configured to control the second switch to be turned on, control the three phases of windings (U, V, W) and the bridge arm conversion module (20) to convert an alternating current input voltage of the power supply into a third direct current voltage, and control the DC/DC conversion module (30) to supply power to the positive temperature coefficient heater based on the third direct current voltage, so that the positive temperature coefficient heater works.

15. The power system according to claim 13, wherein the power system further comprises a positive temperature coefficient heater and a second switch connected in series, and the positive temperature coefficient heater and the second switch connected in series are connected in parallel to the traction battery; and
the control module (40) is configured to control the second switch to be turned on, and supply power to the positive temperature coefficient heater based on a direct current voltage supplied by the traction battery, so that the positive temperature coefficient heater works.

## Patentansprüche

1. Energieumwandlungssystem (1), das ein Brückenzweig-Umwandlungsmodul (20), ein Gleichstrom-Umwandlungsmodul, DC/DC-Umwandlungsmodul (30), einen Motor (10), der drei Phasen von Wicklungen (U, V, W) umfasst, einen Buskondensator (CO) und ein Steuermodul (40) umfasst,
wobei das Brückenzweig-Umwandlungsmodul (20) einen ersten Brückenzweigschalter (204) und eine Vielzahl von parallel geschalteten zweiten Brückenzweigschaltern (201, 202, 203) umfasst, wobei der erste Brückenzweigschalter (204) zu der Vielzahl von parallel geschalteten zweiten Brückenzweigschaltern (201, 202, 203) parallel geschaltet ist, und ein Ende der parallelen Schaltung zwischen dem ersten Brückenzweigschalter (204) und der Vielzahl von parallel geschalteten zweiten Brückenzweigschaltern (201, 202, 203) als ein Eingangs-/Ausgangsende des Brückenzweig-Umwandlungsmodul (20) verwendet wird, wobei jeder Brückenzweigschalter (201, 202, 203, 204) einen oberen Brückenzweigschalter und einen in Reihe geschalteten unteren Brückenzweigschalter umfasst, wobei ein Reihenschaltungspunkt zwischen dem oberen Brückenzweigschalter und dem unteren Brückenzweigschalter ein Brückenzweigmittelpunkt des entsprechenden Brückenzweigschalters (201, 202, 203, 204) ist, ein Brückenzweigmittelpunkt des ersten Brückenzweigschalters (204) der erste Brückenzweigmittelpunkt ist, Brückenzweigmittelpunkte der Vielzahl von zweiten Brückenzweigschaltern (201, 202, 203) die anderen Brückenzweigmittelpunkte sind;
wobei der erste Brückenzweigmittelpunkt des Brückenzweig-Umwandlungsmoduls (20) mit einer Wechselstromladeschnittstelle verbunden ist und jeder Brückenzweigmittelpunkt der Vielzahl von zweiten Brückenzweigschaltern (201, 202, 203) mit einer der drei Phasen von Wicklungen (U, V, W) des Motors (10) verbunden ist;
wobei das Eingangs-/Ausgangsende des Brückenzweig-Umwandlungsmoduls (20) zu dem Buskondensator (CO) und zu
einem ersten Eingangs-/Ausgangsende des DC/DC-Umwandlungsmoduls (30) parallel geschaltet ist, ein zweites Eingangs-/Ausgangsende des DC/DC-Umwandlungsmoduls (30) mit einer Traktionsbatterie verbunden ist, ein drittes Eingangs-/Ausgangsende des DC/DC-Umwandlungsmoduls (30) mit einer Hilfsbatterie verbunden ist, ein Neutralleiter des Motors (10) mit der Wechselstromladeschnittstelle verbunden ist, der Neutralleiter des Motors (10) aus einem gemeinsamen Verbindungsende der drei Phasen von Wicklungen (U, V, W) herausgeführt ist und die Wechselstromladeschnittstelle mit einer Leistungsversorgung verbunden ist;
**dadurch gekennzeichnet, dass**
das Steuermodul (40) konfiguriert ist, um eine Brückenzweigschaltaktion in dem Brückenzweig-Umwandlungsmodul (20) zu steuern, um den Motor (10) basierend auf einer durch die Leistungsversorgung gelieferten Wechselstromeingangsspannung anzutreiben und eine Busspannung (Vbus) an zwei Enden des Buskondensators (CO) auszubilden, und
um das DC/DC-Umwandlungsmodul (30) zu steuern, um die Traktionsbatterie und die Hilfsbatterie basierend auf der Busspannung zu laden.

2. Energieumwandlungssystem nach Anspruch 1, wobei das Steuermodul (40) konfiguriert ist, um obere Brückenzweigschalter und untere Brückenzweigschalter in den Brückenzweigschaltern (201, 202, 203, 204) zu steuern, um ein- oder ausgeschaltet zu werden, um den Motor (10) basierend auf der durch die Leistungsversorgung gelieferten Wechselstromeingangsspannung anzutreiben und die Busspannung (Vbus) an den zwei Enden des Buskondensators (CO) auszubilden.

3. Energieumwandlungssystem nach Anspruch 2, wobei das Steuermodul (40) konfiguriert ist, um ein Steuersignal der oberen Brückenzweigschalter und der untere Brückenzweigschalter in den Brückenzweigschaltern (201, 202, 203, 204) zu erzeugen, und um, basierend auf dem Steuersignal, die oberen Brückenzweigschalter und die unteren Brückenzweigschalter in den Brückenzweigschaltern (201, 202, 203, 204) zu steuern, um ein- oder ausgeschaltet zu werden, wobei das Steuersignal basierend auf einer Ladespannung und einem Ladestrom, die von der Traktionsbatterie und der Hilfsbatterie benötigt werden, einer Busspannung (Vbus), die von dem Buskondensator (CO) benötigt wird, und drei Phasen von Strömen der drei Phasen von Wicklungen (U, V, W) bestimmt wird, und wobei die drei Phasen von Strömen basierend auf einem Strom, der von dem Motor (10) benötigt wird, um eine Solldrehzahl und ein Solldrehmoment zu erreichen, und einem durch die Leistungsversorgung gelieferten Wechselstromeingangsstrom bestimmt werden.

4. Energieumwandlungssystem nach Anspruch 2, wobei das Steuermodul (40) konfiguriert ist, um drei Phasen von Strömen der drei Phasen von Wicklungen (U, V, W) und eine Busspannung (Vbus) des Buskondensators (CO) zu sammeln, um ein Steuersignal der oberen Brückenzweigschalter und der unteren Brückenzweigschalter in den Brückenzweigschaltern (201, 202, 203, 204) basierend auf den drei Phasen von Strömen, der Busspannung (Vbus) und der Wechselstromeingangsspannung, die durch die Leistungsversorgung geliefert wird, zu erzeugen, und um, basierend auf dem Steuersignal, die oberen Brückenzweigschalter und die unteren Brückenzweigschalter in den Brückenzweigschaltern (201, 202, 203, 204) zu steuern, um ein- oder ausgeschaltet zu werden.

5. Energieumwandlungssystem nach einem der Ansprüche 1 bis 4, wobei das DC/DC-Umwandlungsmodul (30) eine erste DC/DC-Umwandlungseinheit (301) und eine zweite DC/DC-Umwandlungseinheit (302) umfasst, wobei ein erstes Eingangs-/Ausgangsende der ersten DC/DC-Umwandlungseinheit (301) als das erste Eingangs-/Ausgangsende des DC/DC-Umwandlungsmoduls (30) verwendet wird, wobei ein zweites Eingangs-/Ausgangsende der ersten DC/DC-Umwandlungseinheit (301) als das zweite Eingangs-/Ausgangsende des DC/DC-Umwandlungsmoduls (30) verwendet wird, und zu einem ersten Eingangs-/Ausgangsende der zweiten DC/DC-Umwandlungseinheit (302) durch die Traktionsbatterie parallel geschaltet wird, und ein zweites Eingangs-/Ausgangsende der zweiten DC/DC-Umwandlungseinheit (302) als das dritte Eingangs-/Ausgangsende des DC/DC-Umwandlungsmoduls (30) verwendet wird;
wobei die erste DC/DC-Umwandlungseinheit (301) konfiguriert ist, um die Busspannung (Vbus) in eine erste Gleichspannung umzuwandeln, um die Traktionsbatterie zu laden; und
die zweite DC/DC-Umwandlungseinheit (302) konfiguriert ist, um eine Spannungsumwandlung auf der ersten Gleichspannung der Traktionsbatterie durchzuführen, um die Hilfsbatterie zu laden.

6. Energieumwandlungssystem nach einem der Ansprüche 1 bis 5, wobei das Energieumwandlungssystem ferner einen ersten Schalter (K0) umfasst und wobei der erste Brückenzweigmittelpunkt des Brückenzweig-Umwandlungsmoduls (20) oder der Neutralleiter des Motors (10) mit der Wechselstromladeschnittstelle durch den ersten Schalter (K0) verbunden ist; und
das Steuermodul (40) konfiguriert ist zum: wenn die Wechselstromladeschnittstelle mit einer externen Vorrichtung verbunden ist, Steuern des ersten Schalters (K0), um eingeschaltet zu werden, Steuern des DC/DC-Umwandlungsmoduls (30), um eine zweite Gleichspannung an das Brückenzweig-Umwandlungsmodul (20) basierend auf der durch die Traktionsbatterie gelieferten Gleichspannung auszugeben, und Steuern des Brückenzweig-Umwandlungsmoduls (20), um die zweite Gleichspannung in eine Wechselspannung umzuwandeln, um den Motor (10) anzutreiben und die externe Vorrichtung zu laden.

7. Verfahren zum Steuern des Energieumwandlungssystems nach Anspruch 1, wobei das Verfahren Folgendes umfasst:
Steuern einer Brückenzweigschaltaktion in dem Brückenzweig-Umwandlungsmodul (20), um den Motor (10) basierend auf einer durch die Leistungsversorgung gelieferten Wechselstromeingangsspannung anzutreiben und eine Busspannung (Vbus) an den zwei Enden des Buskondensators (CO) auszubilden;
Steuern des DC/DC-Umwandlungsmoduls (30), um die Traktionsbatterie und die Hilfsbatterie basierend auf der Busspannung (Vbus) zu laden.

8. Verfahren nach Anspruch 7, wobei das Steuern einer Brückenzweigschaltaktion in dem Brückenzweig-Umwandlungsmodul (20), um den Motor (10) basierend auf einer durch die Leistungsversorgung gelieferten Wechselstromeingangsspannung anzutreiben und um eine Busspannung (Vbus) an den zwei Enden des Buskondensators (CO) auszubilden, Folgendes umfasst:
Steuern von oberen Brückenzweigschaltern und unteren Brückenzweigschaltern in Brückenzweigschaltern (201, 202, 203, 204), um ein- oder ausgeschaltet zu werden, um den Motor (10) basierend auf der durch die Leistungsversorgung gelieferten Wechselstromeingangsspannung anzutreiben und die Busspannung (Vbus) an den zwei Enden des Buskondensators (CO) auszubilden.

9. Verfahren nach Anspruch 8, wobei das Steuern von oberen Brückenzweigschaltern und unteren Brückenzweigschaltern in Brückenzweigschaltern (201, 202, 203, 204), die ein- oder ausgeschaltet werden, umfasst:
Erhalten eines Stroms, der von dem Motor (10) benötigt wird, um eine Solldrehzahl und ein Solldrehmoment und einen durch die Leistungsversorgung gelieferten Wechselstromeingangsstrom zu erreichen, und Bestimmen von drei Phasen von Strömen der drei Phasen von Wicklungen (U, V, W) basierend auf dem Strom, der von dem Motor (10) benötigt wird, um die Solldrehzahl und das Solldrehmoment und den Wechselstromeingangsstrom zu erreichen; und
Erhalten einer Ladespannung und eines Ladestroms, die von der Traktionsbatterie und der Hilfsbatterie benötigt werden, und einer Busspannung (Vbus), die von dem Buskondensator (CO) benötigt wird, Erzeugen eines Steuersignals der oberen Brückenzweigschalter und der unteren Brückenzweigschalter in den Brückenzweigschaltern (201, 202, 203, 204) basierend auf der Ladespannung und dem Ladestrom, die von der Traktionsbatterie und der Hilfsbatterie benötigt werden, der Busspannung (Vbus), die von dem Buskondensator (CO) benötigt wird, und den drei Phasen von Strömen, und Steuern, basierend auf dem Steuersignal, der oberen Brückenzweigschalter und der unteren Brückenzweigschalter in den Brückenzweigschaltern (201, 202, 203, 204), um ein- oder ausgeschaltet zu werden.

10. Verfahren nach Anspruch 8, wobei das Steuern von oberen Brückenzweigschaltern und unteren Brückenzweigschaltern in Brückenzweigschaltern (201, 202, 203, 204), um ein- oder ausgeschaltet zu werden, umfasst:
Sammeln von drei Phasen von Strömen der drei Phasen von Wicklungen (U, V, W) und einer Busspannung (Vbus) des Buskondensators (CO); und
Erzeugen eines Steuersignals der oberen Brückenzweigschalter und der unteren Brückenzweigschalter in den Brückenzweigschaltern (201, 202, 203, 204) basierend auf den drei Phasen von Strömen, der Busspannung (Vbus) und der durch die Leistungsversorgung gelieferten Wechselstromeingangsspannung, und Steuern, basierend auf dem Steuersignal, der oberen Brückenzweigschalter und der unteren Brückenzweigschalter in den Brückenzweigschaltern (201, 202, 203, 204), um ein-oder ausgeschaltet zu werden.

11. Verfahren nach einem der Ansprüche 7 bis 10, wobei das Steuern des DC/DC-Umwandlungsmoduls (30), um die Traktionsbatterie und die Hilfsbatterie basierend auf der Busspannung (Vbus) zu laden, Folgendes umfasst:
Steuern der ersten DC/DC-Umwandlungseinheit (301), um die Busspannung (Vbus) in eine erste Gleichspannung umzuwandeln, um die Traktionsbatterie zu laden; und
Steuern der zweiten DC/DC-Umwandlungseinheit (302), um die Spannungsumwandlung auf der ersten Gleichspannung der Traktionsbatterie durchzuführen, um die Hilfsbatterie zu laden.

12. Verfahren nach einem der Ansprüche 7 bis 11, wobei das Verfahren ferner umfasst: wenn die Wechselstromladeschnittstelle mit einer externen Vorrichtung verbunden ist, Steuern des ersten Schalters (K0), um eingeschaltet zu werden, Steuern des DC/DC-Umwandlungsmoduls (30), um eine zweite Gleichspannung an das Brückenzweig-Umwandlungsmodul (20) basierend auf der durch die Traktionsbatterie gelieferten Gleichspannung auszugeben, und Steuern des Brückenzweig-Umwandlungsmoduls (20), um die zweite Gleichspannung in eine Wechselspannung umzuwandeln, um den Motor (10) anzutreiben und die externe Vorrichtung zu laden.

13. Leistungssystem, wobei das Leistungssystem eine Traktionsbatterie, eine Hilfsbatterie und das Energieumwandlungssystem (1) nach einem der Ansprüche 1 bis 6 umfasst.

14. Leistungssystem nach Anspruch 13, wobei das Leistungssystem ferner einen Heizer mit positivem Temperaturkoeffizienten und einen zweiten Schalter umfasst, die in Reihe geschaltet sind, und wobei der Heizer mit positivem Temperaturkoeffizienten und der zweite Schalter, die in Reihe geschaltet sind, parallel zu der Traktionsbatterie geschaltet sind; und
das Steuermodul (40) konfiguriert ist, um den zweiten Schalter zu steuern, um eingeschaltet zu werden, um die drei Phasen von Wicklungen (U, V, W) und das Brückenzweig-Umwandlungsmodul (20) zu steuern, um eine Wechselstromeingangsspannung der Leistungsversorgung in eine dritte Gleichspannung umzuwandeln und um das DC/DC-Umwandlungsmodul (30) zu steuern, um Leistung an den Heizer mit positivem Temperaturkoeffizienten basierend auf der dritten Gleichspannung zu liefern, so dass der Heizer mit positivem Temperaturkoeffizienten funktioniert.

15. Leistungssystem nach Anspruch 13, wobei das Leistungssystem ferner einen Heizer mit positivem Temperaturkoeffizienten und einen zweiten Schalter umfasst, die in Reihe geschaltet sind, und wobei der Heizer mit positivem Temperaturkoeffizienten und der zweite Schalter, die in Reihe geschaltet sind, parallel zu der Traktionsbatterie geschaltet sind; und
das Steuermodul (40) konfiguriert ist, um den zweiten Schalter zu steuern, um eingeschaltet zu werden, und um Leistung an den Heizer mit positivem Temperaturkoeffizienten basierend auf einer durch die Traktionsbatterie gelieferten Gleichspannung zu liefern, so dass der Heizer mit positivem Temperaturkoeffizienten funktioniert.

## Revendications

1. Système de conversion d'énergie (1), comprenant un module de conversion de branche de pont (20), un courant continu, un module de conversion CC/CC (30), un moteur (10) comprenant trois phases d'enroulements (U, V, W), un condensateur de bus (C0) et un module de commande (40),
dans lequel le module de conversion de branche de pont (20) comprend un premier commutateur de branche de pont (204) et une pluralité de seconds commutateurs de branche de pont (201, 202, 203) connectés en parallèle, le premier commutateur de branche de pont (204) est connecté en parallèle à la pluralité de seconds commutateurs de branche de pont (201, 202, 203) connectés en parallèle, et une extrémité de connexion parallèle entre le premier commutateur de branche de pont (204) et la pluralité de seconds commutateurs de branche de pont (201, 202, 203) connectés en parallèle est utilisée en tant qu'extrémité d'entrée/sortie du module de conversion de branche de pont (20), dans lequel chaque commutateur de branche de pont (201, 202, 203, 204) comprend un commutateur de branche de pont supérieur et un commutateur de branche de pont inférieur connectés en série, un point de connexion en série entre le commutateur de branche de pont supérieur et le commutateur de branche de pont inférieur est un point médian de branche de pont du commutateur de branche de pont correspondant (201, 202, 203, 204), un point médian de branche de pont du premier commutateur de branche de pont (204) est le premier point médian de branche de pont, des points médians de branche de pont de la pluralité de seconds commutateurs de branche de pont (201, 202, 203) sont les autres points médians de branche de pont ;
dans lequel le premier point médian de branche de pont du module de conversion de branche de pont (20) est connecté à une interface de charge de courant alternatif et chaque point médian de branche de pont de la pluralité de seconds commutateurs de branche de pont (201, 202, 203) est connecté à l'une des trois phases d'enroulements (U, V, Vη du moteur (10) ;
dans lequel l'extrémité d'entrée/sortie du module de conversion de branche de pont (20) est connectée en parallèle au condensateur de bus (C0) et à une première extrémité d'entrée/sortie du module de conversion CC/CC (30), une deuxième extrémité d'entrée/sortie du module de conversion CC/CC (30) est connectée à une batterie de traction, une troisième extrémité d'entrée/sortie du module de conversion CC/CC (30) est connectée à une batterie auxiliaire, un fil neutre du moteur (10) est connecté à l'interface de charge de courant alternatif, le fil neutre du moteur (10) est guidé hors d'une extrémité de connexion commune des trois phases d'enroulements (U, V, W), et l'interface de charge de courant alternatif est connectée à une alimentation électrique ;
**caractérisé en ce que**
le module de commande (40) est configuré pour commander une action de commutation de branche de pont dans le module de conversion de branche de pont (20), pour entraîner le moteur (10) sur la base d'une tension d'entrée de courant alternatif fournie par l'alimentation électrique et former une tension de bus (Tbus) au niveau des deux extrémités du condensateur de bus (C0), et commander le module de conversion CC/CC (30) pour charger la batterie de traction et la batterie auxiliaire sur la base de la tension de bus.

2. Système de conversion d'énergie selon la revendication 1, dans lequel le module de commande (40) est configuré pour commander la mise sous tension ou hors tension des commutateurs de branche de pont supérieurs et des commutateurs de branche de pont inférieurs dans les commutateurs de branche de pont (201, 202, 203, 204), pour entraîner le moteur (10) sur la base de la tension d'entrée de courant alternatif fournie par l'alimentation électrique et former la tension de bus (Tbus) au niveau des deux extrémités du condensateur de bus (C0).

3. Système de conversion d'énergie selon la revendication 2, dans lequel le module de commande (40) est configuré pour générer un signal de commande des commutateurs de branche de pont supérieurs et des commutateurs de branche de pont inférieurs dans les commutateurs de branche de pont (201, 202, 203, 204), et commander, sur la base du signal de commande, la mise sous tension ou hors tension des commutateurs de branche de pont supérieurs et des commutateurs de branche de pont inférieurs dans les commutateurs de branche de pont (201, 202, 203, 204), dans lequel le signal de commande est déterminé sur la base d'une tension de charge et d'un courant de charge qui sont requis par la batterie de traction et la batterie auxiliaire, d'une tension de bus (Tbus) requise par le condensateur de bus (C0), et de trois phases de courants des trois phases d'enroulements (U, V, W), et les trois phases de courants sont déterminées sur la base d'un courant requis par le moteur (10) pour atteindre une vitesse de rotation cible et un couple cible et un courant d'entrée de courant alternatif fourni par l'alimentation électrique.

4. Système de conversion d'énergie selon la revendication 2, dans lequel le module de commande (40) est configuré pour collecter trois phases de courants des trois phases d'enroulements (U, V, W) et une tension de bus (Tbus) du condensateur de bus (C0), générer un signal de commande des commutateurs de branche de pont supérieurs et des commutateurs de branche de pont inférieurs dans les commutateurs de branche de pont (201, 202, 203, 204) sur la base des trois phases de courants, de la tension de bus (Tbus) et de la tension d'entrée de courant alternatif fournie par l'alimentation électrique, et commander, sur la base du signal de commande, la mise sous tension ou hors tension des commutateurs de branche de pont supérieurs et des commutateurs de branche de pont inférieurs dans les commutateurs de branche de pont (201, 202, 203, 204).

5. Système de conversion d'énergie selon l'une quelconque des revendications 1 à 4, dans lequel le module de conversion CC/CC (30) comprend une première unité de conversion CC/CC (301) et une seconde unité de conversion CC/CC (302), une première extrémité d'entrée/sortie de la première unité de conversion CC/CC (301) est utilisée en guise de première extrémité d'entrée/sortie du module de conversion CC/CC (30), une deuxième extrémité d'entrée/sortie de la première unité de conversion CC/CC (301) est utilisée en guise de deuxième extrémité d'entrée/sortie du module de conversion CC/CC (30) et est connectée en parallèle à une première extrémité d'entrée/sortie de la seconde unité de conversion CC/CC (302) par l'intermédiaire de la batterie de traction, et une deuxième extrémité d'entrée/sortie de la seconde unité de conversion CC/CC (302) est utilisée en guise de troisième extrémité d'entrée/sortie du module de conversion CC/CC (30) ;
la première unité de conversion CC/CC (301) est configurée pour convertir la tension de bus (Tbus) en une première tension continue pour charger la batterie de traction ; et la seconde unité de conversion CC/CC (302) est configurée pour effectuer une conversion de tension sur la première tension continue de la batterie de traction pour charger la batterie auxiliaire.

6. Système de conversion d'énergie selon l'une quelconque des revendications 1 à 5, dans lequel le système de conversion d'énergie comprend en outre un premier commutateur (K0), et le premier point médian de branche de pont du module de conversion de branche de pont (20) ou le fil neutre du moteur (10) est connecté à l'interface de charge de courant alternatif par l'intermédiaire du premier commutateur (K0) ; et
le module de commande (40) est configuré pour : lorsque l'interface de charge de courant alternatif est connectée à un dispositif externe, commander la mise sous tension du premier commutateur (K0), commander le module de conversion CC/CC (30) pour délivrer en sortie une deuxième tension continue au module de conversion de branche de pont (20) sur la base de la tension continue fournie par la batterie de traction, et commander le module de conversion de branche de pont (20) pour convertir la deuxième tension continue en une tension alternative, pour entraîner le moteur (10) et charger le dispositif externe.

7. Procédé de commande du système de conversion d'énergie selon la revendication 1, le procédé comprenant :
la commande d'une action de commutation de branche de pont dans le module de conversion de branche de pont (20), pour entraîner le moteur (10) sur la base d'une tension d'entrée de courant alternatif fournie par l'alimentation électrique et former une tension de bus (Tbus) au niveau des deux extrémités du condensateur de bus (C0) ; et la commande du module de conversion CC/CC (30) pour charger la batterie de traction et la batterie auxiliaire sur la base de la tension de bus (Tbus).

8. Procédé selon la revendication 7, dans lequel la commande d'une action de commutation de branche de pont dans le module de conversion de branche de pont (20), pour entraîner le moteur (10) sur la base d'une tension d'entrée de courant alternatif fournie par l'alimentation électrique et former une tension de bus (Tbus) au niveau des deux extrémités du condensateur de bus (C0) comprend :
la commande de la mise sous tension ou hors tension des commutateurs de branche de pont supérieurs et des commutateurs de branche de pont inférieurs dans les commutateurs de branche de pont (201, 202, 203, 204), pour entraîner le moteur (10) sur la base de la tension d'entrée de courant alternatif fournie par l'alimentation électrique et former la tension de bus (Tbus) au niveau des deux extrémités du condensateur de bus (C0).

9. Procédé selon la revendication 8, dans lequel la commande de mise sous tension ou hors tension des commutateurs de branche de pont supérieurs et des commutateurs de branche de pont inférieurs dans des commutateurs de branche de pont (201, 202, 203, 204) comprend :
l'obtention d'un courant requis par le moteur (10) pour atteindre une vitesse de rotation cible et un couple cible et un courant d'entrée de courant alternatif fourni par l'alimentation électrique, et la détermination des trois phases de courants des trois phases d'enroulements (U, V, W) sur la base du courant requis par le moteur (10) pour atteindre la vitesse de rotation cible et le couple cible et le courant d'entrée de courant alternatif ; et
l'obtention d'une tension de charge et d'un courant de charge qui sont requis par la batterie de traction et la batterie auxiliaire et d'une tension de bus (Tbus) requise par le condensateur de bus (C0), la génération d'un signal de commande des commutateurs de branche de pont supérieurs et des commutateurs de branche de pont inférieurs dans les commutateurs de branche de pont (201, 202, 203, 204) sur la base de la tension de charge et du courant de charge qui sont requis par la batterie de traction et la batterie auxiliaire, de la tension de bus (Tbus) requise par le condensateur de bus (C0), et des trois phases de courants, et la commande, sur la base du signal de commande, de la mise sous tension ou hors tension des commutateurs de branche de pont supérieurs et des commutateurs de branche de pont inférieurs dans les commutateurs de branche de pont (201, 202, 203, 204).

10. Procédé selon la revendication 8, dans lequel la commande de la mise sous tension ou hors tension des commutateurs de branche de pont supérieurs et des commutateurs de branche de pont inférieurs dans des commutateurs de branche de pont (201, 202, 203, 204) comprend :
la collecte de trois phases de courants des trois phases d'enroulements (U, V, Vη et d'une tension de bus (Tbus) du condensateur de bus (C0) ; et
la génération d'un signal de commande des commutateurs de branche de pont supérieurs et des commutateurs de branche de pont inférieurs dans les commutateurs de branche de pont (201, 202, 203, 204) sur la base des trois phases de courants, de la tension de bus (Tbus) et de la tension d'entrée de courant alternatif fournie par l'alimentation électrique, et la commande, sur la base du signal de commande, de la mise sous tension ou hors tension des commutateurs de branche de pont supérieurs et des commutateurs de branche de pont inférieurs dans les commutateurs de branche de pont (201, 202, 203, 204).

11. Procédé selon l'une quelconque des revendications 7 à 10, dans lequel la commande du module de conversion CC/CC (30) pour charger la batterie de traction et la batterie auxiliaire sur la base de la tension de bus (Tbus) comprend :
la commande de la première unité de conversion CC/CC (301) pour convertir la tension de bus (Tbus) en une première tension continue pour charger la batterie de traction ; et
la commande de la seconde unité de conversion CC/CC (302) pour effectuer une conversion de tension sur la première tension continue de la batterie de traction pour charger la batterie auxiliaire.

12. Procédé selon l'une quelconque des revendications 7 à 11, dans lequel le procédé comprend en outre :
lorsque l'interface de charge de courant alternatif est connectée à un dispositif externe, la commande de la mise sous tension du premier commutateur (K0), la commande du module de conversion CC/CC (30) pour délivrer en sortie une deuxième tension continue au module de conversion de branche de pont (20) sur la base de la tension continue fournie par la batterie de traction, et la commande du module de conversion de branche de pont (20) pour convertir la deuxième tension continue en une tension alternative, pour entraîner le moteur (10) et charger le dispositif externe.

13. Système d'alimentation, dans lequel le système d'alimentation comprend une batterie de traction, une batterie auxiliaire et le système de conversion d'énergie (1) selon l'une quelconque des revendications 1 à 6.

14. Système d'alimentation selon la revendication 13, dans lequel le système d'alimentation comprend en outre un élément chauffant à coefficient de température positif et un second commutateur connecté en série, et l'élément chauffant à coefficient de température positif et le second commutateur connectés en série sont connectés en parallèle à la batterie de traction ; et
le module de commande (40) est configuré pour commander la mise sous tension du second commutateur, commander les trois phases d'enroulements (U, V, W) et le module de conversion de branche de pont (20) pour convertir une tension d'entrée de courant alternatif de l'alimentation en énergie électrique en une troisième tension continue, et commander le module de conversion CC/CC (30) pour alimenter l'élément chauffant à coefficient de température positif sur la base de la troisième tension continue, de sorte que l'élément chauffant à coefficient de température positif fonctionne.

15. Système d'alimentation selon la revendication 13, dans lequel le système d'alimentation comprend en outre un élément chauffant à coefficient de température positif et un second commutateur connecté en série, et l'élément chauffant à coefficient de température positif et le second commutateur connectés en série sont connectés en parallèle à la batterie de traction ; et
le module de commande (40) est configuré pour commander la mise sous tension du second commutateur, et alimenter l'élément chauffant à coefficient de température positif sur la base d'une tension continue fournie par la batterie de traction, de sorte que l'élément chauffant à coefficient de température positif fonctionne.
